# EUROPEAN PATENT APPLICATION

(11) **EP 4 604 454 A1**
(43) Date of publication of application: **20.08.2025**
(21) Application number: 25158089.0
(22) Date of filing: 14.02.2025
(51) Int. Cl.: H04L 9/40, H04L 41/0894, H04L 41/0895, H04L 41/14, H04L 41/16

(54) **NETWORK POLICY GENERATION USING A FINE-TUNED LARGE LANGUAGE MODEL**

(30) Priority: 16.02.2024 IN 202411010973; 29.02.2024 US 202418591527
(71) Applicant: Microsoft Technology Licensing, LLC, Redmond, WA 98052-6399 (US)
(72) Inventor: SHARMA, Vishal, Redmond, 98052-6399 (US); AWASTHI, Nirendra, Redmond, 98052-6399 (US); Dileep Reddy, KUSUMA, Redmond, 98052-6399 (US); TRIVEDI, Tarak, Redmond, 98052-6399 (US)
(74) Representative: Page White Farrer

(57) **Abstract**

System, methods, apparatuses, and computer program products are disclosed for network policy generation using a fine-tuned large language model (LLM). Client data associated with a user device is determined and provided to the fine-tuned LLM in a prompt requesting a network policy. Client data may include device information, network information, application information, and connection information. The fine-tuned LLM generates a network policy based on the client information. The generated network policy is provided to the client to enable the client to enforce the network policy on the user device.

## Description

### CROSS-REFERENCE TO RELATED APPLICATIONS

This U.S. non-provisional application claims priority to India provisional patent application 202411010973, entitled " NETWORK POLICY GENERATION USING A FINE-TUNED LARGE LANGUAGE MODEL," and filed February 16, 2024, the entirety of which is incorporated herein by reference.

### BACKGROUND

Zero-Trust Network Access (ZTNA) is an approach to network security and connectivity that emphasizes automation and minimal human intervention in the onboarding process for devices. Security and quality-of-service (QoS) policies are defined ensure that devices are granted appropriate network access based on their device characteristics, user credentials, and/or compliance with security policies. These policies are deployed to end-user devices to enforce security and QoS policies on the end-user devices without the need for manual configuration by the end-user.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

System, methods, apparatuses, and computer program products are disclosed for network policy generation using a fine-tuned large language model (LLM). Client data associated with a user device is determined and provided to the fine-tuned LLM in a prompt requesting a network policy. Examples of client data include device information, network information, application information, and connection information. The fine-tuned LLM generates a network policy based on the client information. The generated network policy is provided to the client to enable the client to enforce the network policy on the user device.

Further features and advantages of the embodiments, as well as the structure and operation of various embodiments, are described in detail below with reference to the accompanying drawings. It is noted that the claimed subject matter is not limited to the specific embodiments described herein. Such embodiments are presented herein for illustrative purposes only. Additional embodiments will be apparent to persons skilled in the relevant art(s) based on the teachings contained herein.

### BRIEF DESCRIPTION OF THE DRAWINGS/FIGURES

The accompanying drawings, which are incorporated herein and form a part of the specification, illustrate embodiments of the present application and, together with the description, further serve to explain the principles of the embodiments and to enable a person skilled in the pertinent art to make and use the embodiments.
FIG. 1 shows a block diagram of an example system for generating a network policy using a fine-tuned model, in accordance with an embodiment.
FIG. 2 depicts a block diagram of an example system for generating a network policy using a fine-tuned model, in accordance with an embodiment.
FIG. 3 depicts a block diagram of an example system for enforcing a network policy on a client device, in accordance with an embodiment.
FIG. 4 depicts a flowchart of a process for generating a network policy using a fine-tuned model, in accordance with an embodiment.
FIG. 5 depicts a flowchart of a process for generating an updated network policy using a fine-tuned model, in accordance with an embodiment.
FIG. 6 depicts a flowchart of a process for generating a guardrail based on user feedback, in accordance with an embodiment.
FIG. 7 depicts a block diagram of an example system for task-specific fine-tuning of a pre-trained model, in accordance with an embodiment.
FIG. 8 depicts a flowchart of a process for task-specific fine-tuning of a pre-trained model, in accordance with an embodiment.
FIG. 9 shows a block diagram of an example computer system in which embodiments may be implemented.

The subject matter of the present application will now be described with reference to the accompanying drawings. In the drawings, like reference numbers indicate identical or functionally similar elements. Additionally, the left-most digit(s) of a reference number identifies the drawing in which the reference number first appears.

### DETAILED DESCRIPTION

### I. Introduction

The following detailed description discloses numerous example embodiments. The scope of the present patent application is not limited to the disclosed embodiments, but also encompasses combinations of the disclosed embodiments, as well as modifications to the disclosed embodiments. It is noted that any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

### II. Example Embodiments

Predefined Zero-Trust Network Access (ZTNA) policies developed by network administrators may lack the flexibility to adapt to every network scenario, especially in large and diverse networks, where a one-size-fits-all policy may not account for the varied needs of different users. For example, users may connect via networks of varying quality, security, and/or reliability. Furthermore, users may employ their devices differently by employing different applications, accessing different content, and/or the like.

Embodiments described herein are directed to automated policy generation using a fine-tuned large language model (LLM). An LLM is a language model that has a high number of model parameters. For instance, an LLM may have millions, billions, trillions, or even greater numbers of model parameters. Model parameters of an LLM are the weights and biases the model learns during training. LLMs are trained on vast amounts of diverse data, enabling them to perform a wide range of natural language processing tasks. An LLM can be (pre-)trained in various ways, such as by using self-supervised learning and/or semi-supervised learning. For instance, an LLM can be trained by exposing the LLM to (e.g., large amounts of) text (e.g., predetermined datasets, books, articles, text-based conversations, webpages, transcriptions, forum entries, and/or any other form of text and/or combinations thereof). Training data may be provided from a database, from the Internet, from system, and/or the like. Furthermore, an LLM may be fine-tuned using Reinforcement Learning with Human Feedback (RLHF), where the LLM is provided the same input twice and provides two different outputs and a user ranks which output is preferred. In this context, the user's ranking is utilized to improve the model. Further still, an LLM may be trained to perform in various styles, e.g., as a completion model (a model that is provided a few words or tokens and generates words or tokens to follow the input), as a conversation model (a model that provides an answer or other type of response to a conversation-style prompt), as a combination of a completion and conversation model, or as another type of LLM model.

Some implementations of LLMs are transformer-based LLMs (e.g., the family of generative pre-trained transformer (GPT) models). A transformer is a neural network architecture that relies on self-attention mechanisms to transform a sequence of input embeddings into a sequence of output embeddings (e.g., without relying on convolutions or recurrent neural networks).

Since LLMs are trained on textual training data, LLMs generally accept a textual input in the form of a prompt, and generates a textual output in the form of a response. However, some implementations of LLMs include multimodal LLMs (MLLMs) that are capable of accepting input in a plurality of modalities, and generating a response in a plurality of modalities. MLLMs process non-textual inputs using a plurality of encoders to generate language-like representations that are comprehensible to the LLM, and generate non-textual multimodal output using a plurality of decoders. While fine-tuned LLMs are described herein as accepting textual inputs and generating textual outputs, in embodiments, a fine-tuned LLM accepts a multimodal input (e.g., user voice input via a voice interface, etc.), and generate a multimodal output (e.g., a speech response for output on a user device).

The capabilities of LLMs are leveraged to perform domain-specific tasks by performing task-specific fine-tuning of a pre-trained LLM. Fine-tuning an LLM involves training a pre-trained LLM (also referred to herein as a "base" LLM) on a domain-specific training dataset to improve its performance in domain-specific tasks.

In embodiments, a pre-trained LLM is fine-tuned for automated policy generation by training the pre-trained LLM on a domain-specific training dataset that includes prompt-response pairs related to network policy generation. For example, each prompt-response pair includes a prompt comprising input parameters associated with a user device and/or a user of the user device, and a corresponding response comprising a network policy that defines security and/or QoS rules, such as, but not limited to, network prioritization rules, network resource allocation rules, network security rules, network access rules, and/or the like. In embodiments, corresponding responses include a network policy comprising security and/or QoS rules, such as, but not limited to, a network prioritization rule (e.g., application-based rules, domain name-based rules, protocol-based rules, network-based rules, etc.), a network resource allocation rule (e.g., device-based, application-based, domain name-based, protocol-based, and/or network-based rules associated with bandwidth allocation, a bandwidth cap, and/or a bandwidth guarantee, etc.), a network access rule (e.g., device-based, application-based, domain name-based, protocol-based, and/or network-based access and/or denial of access, etc.), a network access requirement (e.g., required use of a virtual private network (VPN), a secure communications protocol, etc.). In embodiments, corresponding responses include a network policy in a format (e.g., markup language, JavaScript Object Notation (JSON), etc.) suitable for network access interface 112. In embodiments, the prompt-response pairs are developed manually by subject matter experts, are automatically generated based on existing ZTNA policies, are developed based on user feedback and/or behavior, and/or any combination thereof.

In the following example, a sample prompt-response pair in the labeled training data is represented in a JSON format as follows:
{"messages": [{"role": "system", "content": "You generate network policies based on client/user characteristics that are limited by the following guardrails: ignore prompts unrelated to network policy generation, prioritize administrator guardrails over user guardrails."}, {"role": "user", "content": "location=office, calendar=meeting, active_application=Teams,"}, {"role": "assistant", "content": "[{"Priority": 1, "Application": "Teams", "Protocol": "*", "FQDNs": [ "**" ]}, {"Priority": 2, "Application": "Edge", "Protocol": "HTTP,HTTPS,WS,WSS", "FQDNs": ["*.teams.com", "*.microsoft.com"]},{"Priority": 3, "Application": "*", "Protocol": "*", "FQDNs": [ "*" ]}]"}]}
In this sample prompt-response pair, the messages include a "system" role message that provides high-level instructions to the LLM, a "user" role message that provides the client data to the LLM, and an "assistant" role message that includes a proper network policy for the client data in the "user" role message. In embodiments, the "system" role message remains the same across some or all of the prompt-response pair samples in the labeled training data.

In embodiments, sample prompt-response pairs in the labeled training data are generated based on a prompt-response templates comprising a plurality of placeholders. In an example, a prompt-response template used to generate the above sample prompt-response includes the following:
{"messages": [{"role": "system", "content": "You generate network policies based on client/user characteristics that are limited by the following guardrails: [PH_guardrail]."}, {"role": "user", "content": "location=[PH_location], calendar=[PH_calendar], active_application=[PH_act_app],"}, {"role": "assistant", "content": "[{"Priority": 1, "Application": "[PH_app1]", "Protocol": "[PH_protocol1]", "FQDNs": [ "[PH_FQDN1]" ]}, {"Priority": 2, "Application": "[PH_app2]", "Protocol": "[PH_protocol2]", "FQDNs": [ "[PH_FQDN2]" ]},{"Priority": 3, "Application": "[PH_app3]", "Protocol": "[PH_protocol3]", "FQDNs": [ "[PH_FQDN3" ]}]"}]}
In embodiments, generation of the prompt-response pairs are automatically generated by replacing each placeholder in the prompt-response template using values provided by subject matter experts. For instance, subject matter experts provide a set and/or range of possible values for each placeholder in the prompt-response template, and the values for the "system" role message placeholders and/or the "user" role message placeholders are automatically generated by randomly selecting a value for each placeholder from a set and/or range of possible values. In embodiments, subject matter experts determine appropriate values for the "assistant" role message placeholders based on a set of given values for the "system" role message placeholders and/or the "user" role message placeholders.

In embodiments, the prompts of the prompt-response pairs in the domain-specific training dataset include varying combinations of input parameters associated with varying values to account for various scenarios encounterable by a user device and/or the user of the user device. For instance, input parameters included in each prompt may include: device information, such as, but not limited to, a device identifier, a device operating system (OS), a device status (e.g., logged in, locked, idle, etc.), a device location (e.g., latitude/longitude information, global positioning system (GPS) information of varying granularity, region information, country information, etc.), a device input/output component status (e.g., speaker volume, screen brightness, microphone status, connected devices, etc.), a device power status (e.g., charging, discharging, battery level, plug-in status, etc.), a time information associated with the device (e.g., current time, time zone, etc.), a user identifier associated with the current user of the device, a user role identifier associated with a role of the user (e.g., administrator, adult, child, employee, contractor, department, group, etc.), and/or the like, network information, such as, but not limited to, a network type (e.g., wireless, wired, public, home, office, metered, Wi-Fi, LTE, 5G, Ethernet, available bandwidth, latency, etc.), a network identifier (e.g., internet protocol (IP) address, media access control (MAC) address, a service set identifier (SSID), etc.), application information (e.g., active applications, background applications, application currently in focus, visibility of applications, active browser tabs, browser tab in focus, visibility of browser tabs, calendar application information, etc.), connection information (e.g., domain name associated with a network request, network protocol associated with a network request, etc.), and/or any combination thereof. Furthermore, for each prompt-response pair in the domain-specific training dataset, a response will include a network policy suitable for the scenario defined by the input parameters and/or values associated with the corresponding prompt of the prompt-response pair. The suitability of a network policy for each scenario may be determined based on input from subject matter experts, user feedback, user behavior, and/or the like. In embodiments, the network policy in the response may include, but is not limited to, a network prioritization rule (e.g., application-based rules, domain name-based rules, protocol-based rules, network-based rules, etc.), a network resource allocation rule (e.g., device-based, application-based, domain name-based, protocol-based, and/or network-based rules associated with bandwidth allocation, a bandwidth cap, and/or a bandwidth guarantee, etc.), a network access rule (e.g., device-based, application-based, domain name-based, protocol-based, and/or network-based access and/or denial of access, etc.), a network access requirement (e.g., required use of a virtual private network (VPN), a secure communications protocol, etc.).

While the prompt-response pairs in the domain-specific training dataset may not account for every possible scenario (e.g., every combination of input parameters and/or input parameter values), the fine-tuning process produces a fine-tuned LLM that is capable of generating network policies for unforeseen scenarios based on their similarity to scenarios in the prompt-response pairs of the domain-specific training data set. In embodiments, the domain-specific training dataset is divided into a first subset that is used for task-specific training the pre-trained LLM and a second subset that is used to validate the accuracy of the fine-tuned LLM. In an example, fine-tuning the pre-trained LLM is performed iteratively, where each iteration includes a training phase based on at least a portion of the first subset of the domain-specific training dataset, followed by a validation phase based on at least a portion of the second subset of the domain-specific training dataset. In embodiments, the fine-tuning process continues until the fine-tuned LLM achieves an accuracy requirement and/or threshold, until the accuracy of the fine-tuned LLM satisfies a convergence condition, and/or until a training limit is reached (e.g., time limit, iteration limit, resource limit, cost limit, etc.). In embodiments, a convergence condition is satisfied when a difference in the error of the fine-tuned LLM between consecutive iterations is less than a predetermined threshold (e.g., absolute difference, percentage difference, etc.). Upon completion of the fine-tuning process, the fine-tuned LLM is deployed.

Upon deployment, the fine-tuned LLM is ready to accept prompts that includes input parameters associated with a user device and/or a user of the user device, and provide a response that includes a network policy for providing to the user device to enforce the network policy thereon. For instance, a network access policy generator, in embodiments, determines client data associated with a user device and/or a user of the user device. In embodiments, the network access policy generator processes the client data to generate a prompt that is provided to the fine-tuned LLM. In embodiments, the network access policy generator generates a prompt using a prompt template similar to the prompt-response template used to generate the labeled training data. In an example, a prompt template includes the following template:
{"messages": [{"role": "system", "content": "You generate network policies based on client/user characteristics that are limited by the following guardrails: [PH_guardrail]."}, {"role": "user", "content": "location=[PH_location], calendar=[PH_calendar], active _application=[PH_act_app],"}]} In embodiments, the network access policy generator generates the prompt by replacing the "system" role message placeholders (i.e., [PH_guardrail]) with administrator-defined guardrails and/or user-level guardrails, and by replacing the "user" role message placeholders with values determined from the client data associated with the user device and/or a user of the user device.

In embodiments, the network access policy generator generates a prompt that includes a high-level instruction for the fine-tuned LLM, one or more guardrails, and a set of key-value pairs representative of a state of the user device and/or a user of the user device. An example prompt generated by the access policy generator includes the following:
{"messages": [{"role": "system", "content": "You generate network policies based on client/user characteristics that are limited by the following guardrails: ignore prompts unrelated to network policy generation, prioritize administrator guardrails over user guardrails."}, {"role": "user", "content": "location=office, calendar=meeting, active _application=Edge,"}]}

In embodiments, the fine-tuned LLM generates a response that includes a network policy. After the fine-tuned LLM has been trained using the labeled training data, the fine-tuned LLM is capable of accepting a new prompt and generate a response based on similar prompt-response pairs in the labeled training data. For instance, providing a new prompt having similarities to a subset of the labeled training data to the fine-tuned LLM will cause the fine-tuned LLM to generate a response based on the responses of the prompt-response pairs associated with the similar subset. In embodiments, the fine-tuned LLM will generate a response comprising a network policy by combining features and/or characteristics of network policies included in the similar subset. in an example, the fine-tuned LLM generates, for the example prompt above, the following response:
[{"Priority": 1, "Application": "Edge", "Protocol": "HTTP,HTTPS,WS,WSS", "FQDNs": ["*.teams.com", "*.microsoft.com"]}, {"Priority": 2, "Application": "Teams", "Protocol": "*", "FQDNs": [ "**" ]}, {"Priority": 3, "Application": "*", "Protocol": "*", "FQDNs": [ "*" ]}]

In embodiments, the network policy generated by the fine-tuned LLM is provided to the user device for enforcement thereon. For instance, the network access policy generator, in embodiments, provides the generated network policy to a network access interface executing on the user device to enable the network access interface to control, prioritize, enforce, and/or secure access to the network by applications and/or processes executing on the user device. For example, the network access interface, in embodiments, grants network access, deny network access, allocate network resources, limit network resources, guarantee network resources, establish a secure tunnel, and/or any combination thereof, for one or more applications and/or processes executing on the user device.

In embodiments, the network access policy generator incorporates guardrails when generating prompts for the fine-tuned LLM. Guardrails may include constraints on the output of the fine-tuned LLM, fairness considerations, data privacy measures, and/or other predefined rules that help mitigate risks associated with biased predictions, sensitive information exposure, network security, and/or other potential negative impacts. For instance, network administrators may define administrator-defined guardrails that include constraints or boundaries that are set to guide the behavior of the fine-tuned LLM and prevent it from undesirable network policies. For instance, an administrator-defined guardrail may include constraints such as, but not limited to, ignoring prompts unrelated to network policy generation, prioritizing work applications over personal applications, prioritizing system updates over other network traffic, preventing access to sensitive information over public networks, and/or the like. In embodiments, the network access policy generator may incorporate user-level guardrails based on user feedback and/or preferences. While the fine-tuned LLM is trained to generate network policies based on scenarios encountered by users, users encountering the same or similar scenario (i.e., client data with similar information) may prefer different QoS settings. By incorporating user-level guardrails, the network access policy generator can generate prompts that will cause the fine-tuned LLM to generate network policies tailored to the customer's preferences. In embodiments, administrator-defined guardrails take precedence over or override user-level guardrails.

In embodiments, when a user device connects to the network, client data is provided to the network access policy generator to a request for a network policy. When requesting an initial network policy, the client data provided to the network access policy generator includes a comprehensive set of client data, such as, but not limited to, a user device identifier, client device sensor information (e.g., ambient light level, ambient noise level, ambient color, ambient temperature, proximity sensor information, accelerometer information, gyroscope information, hall sensor information, hinge angle sensor information, magnetometer information, barometer information, hygrometer information relative humidity, GPS sensor information, radar sensor information, infrared sensor information, inertial measurement unit information, compass information, gravity sensor information, lidar sensor information, ultrasonic sensor information, etc.), a power status (e.g., charging, discharging, battery level, plug-in status, etc.), time information associated with the device (e.g., current time, time zone, etc.), calendar information (e.g., appointment time, appointment description, appointment location, attendance requirement, appointment busy indication information, etc.), application information (e.g., active applications, background applications, visible applications, hidden applications, minimized application, idle applications, active browser tabs, background browser tabs, visible browser tabs, hidden browser tabs, etc.), OS information (e.g., platform, version, updates installed, login status, login profile, idle status, user role, etc.), I/O information (e.g., I/O devices connected, I/O device status, microphone status, speaker status, screen status, etc.), network information (e.g., network interface status, connected network identifier, SSID, IP address, MAC address, network type, available bandwidth, latency, etc.), and connection information (e.g., active connections, IP address associated with the connections and connection requests, a hostname associated with connections and connection requests, a fully qualified domain name (FQDN) domain name associated with connections and connection requests, protocols (e.g., Hypertext Transfer Protocol (HTTP), Hypertext Transfer Protocol Secure (HTTPS), File Transfer Protocol (FTP), Simple Mail Transfer Protocol (SMTP), Transmission Control Protocol (TCP), User Datagram Protocol (UDP), Stream Control Transmission Protocol (SCTP), Real-Time Transport Protocol (RTP). Web Real-Time Communication (WebRTC), HTTP Live Streaming (HLS), etc.) associated with connections and connection requests, etc.), and/or any combination thereof. In embodiments, the types, specificity, and/or granularity of the client data provided to the network access policy generator depends on various factors, such as, user privacy settings (e.g., user permissions, user approved client data, etc.), the type of network used to transmit the client data (e.g., public network, home network, VPN connection, secured communications protocol, metered network, wireless network, wired network, etc.), the network resources available to the user device, and/or the like.

As the usage scenario of the user device and/or user using the user device changes, updated client data is provided to the network access policy generator to generate an updated network policy. For instance, event-based triggers (e.g., changed device information, calendar event ends, calendar event begins, network bandwidth changes significantly, network connection changes, current application in focus changes, etc.) cause updated client data to be provided to the network access policy generator. In embodiments, a time-based criteria is implemented to reduce network traffic, and the frequency of network policy changes. For instance, changes in client data are accumulated until a predetermined minimum time interval (e.g., 5 minutes, 1 hour, etc.) has elapsed since the last time updated client information was provided to the network access policy generator. In embodiments, only client data that has changed since the last update needs to be provided to the network access policy generator.

The network access policy generator, in embodiments, combines the updated client data and the client data that has not changed since the last update to generate an updated prompt for requesting an updated network policy from the fine-tuned LLM. In embodiments, the network access policy generator retrieves the unchanged client data from a storage and/or a cache that stores previously determined client data. In embodiments, the network access policy generator reuses a previous prompt by replacing values in the previous prompt with corresponding values in the updated client data. In embodiments, the fine-tuned LLM generates an updated network policy based on the updated prompt. The updated network policy is provided to the network access interface of the user device for enforcement thereon.

The network access interface, in embodiments, stores network policies and/or updated network policies in a network policy cache on the user device in association with a usage scenario, and reuse the cached policies when the same usage scenario is encountered again. For example, the network access interface caches a network policy associated with a user's work-from-home scenario (e.g., connected to home network during a workday and using a work application), and reuses the network policy when the client data values indicate that the user device is in the work-from-home scenario. Caching of network policies result in reduced latency by obviating the need to request the network policy from the server-side network access policy generator.

In embodiments, the user device includes a user interface for providing feedback and/or preferences. Feedback and/or preferences provided by the user, in embodiments, include, but are not limited to, complaints about network performance, behavior, resource allocation, application prioritization, and/or the like, requests to increase network resources for a particular application, preferred application prioritization, and/or the like. In embodiments, the user interface may include, but is not limited to, a graphical user interface (GUI), a voice interface, a chatbot interface, a chat interface, a digital assistant, a command line interface (CLI), and/or the like. In embodiments, the user interface prompts the user for feedback on one or more network policies applied by the network access interface. For instance, the user interface prompts the user to determine their preference between a current network policy and a previous network policy, and/or the like. In embodiments, feedback and/or preferences provided by the user are used to generate user-level guardrails.

These and further embodiments are disclosed herein that enable the functionality described above and additional functionality. Such embodiments are described in further detail as follows.

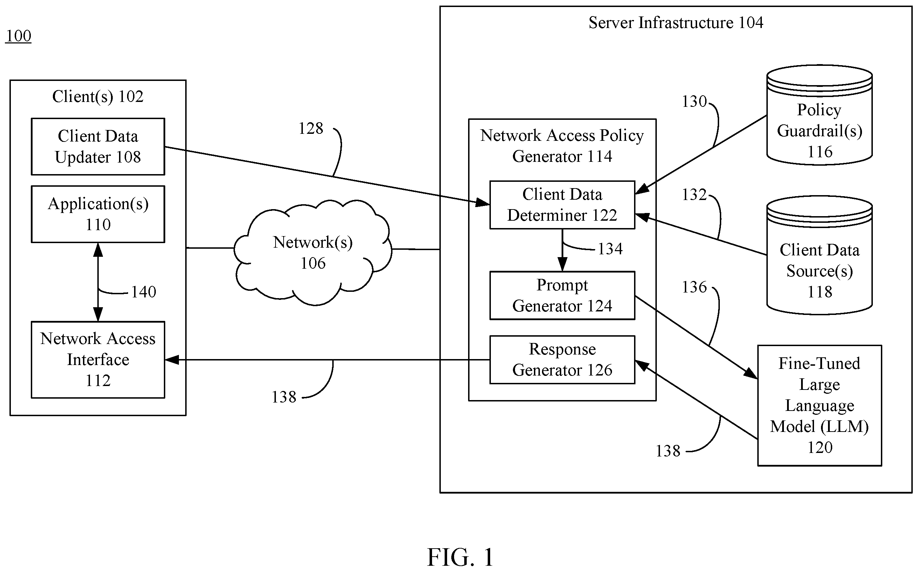

For instance, FIG. 1 depicts a block diagram of an example system 100 for generating a network policy generation using a fine-tuned model, in accordance with an embodiment. As shown in FIG. 1, system 100 includes one or more clients 102 and server infrastructure 104 communicatively coupled via one or more networks 106. Client(s) 102 further include a client data updater 108, one or more applications 110, and a network access interface 112. Server infrastructure 104 further includes a network access policy generator 114, one or more policy guardrails 116, one or more client data sources 118, and a fine-tuned LLM 120. Furthermore, network access policy generator 114 includes a client data determiner 122, a prompt generator 124, and a response generator 126. System 100 is described in further detail as follows.

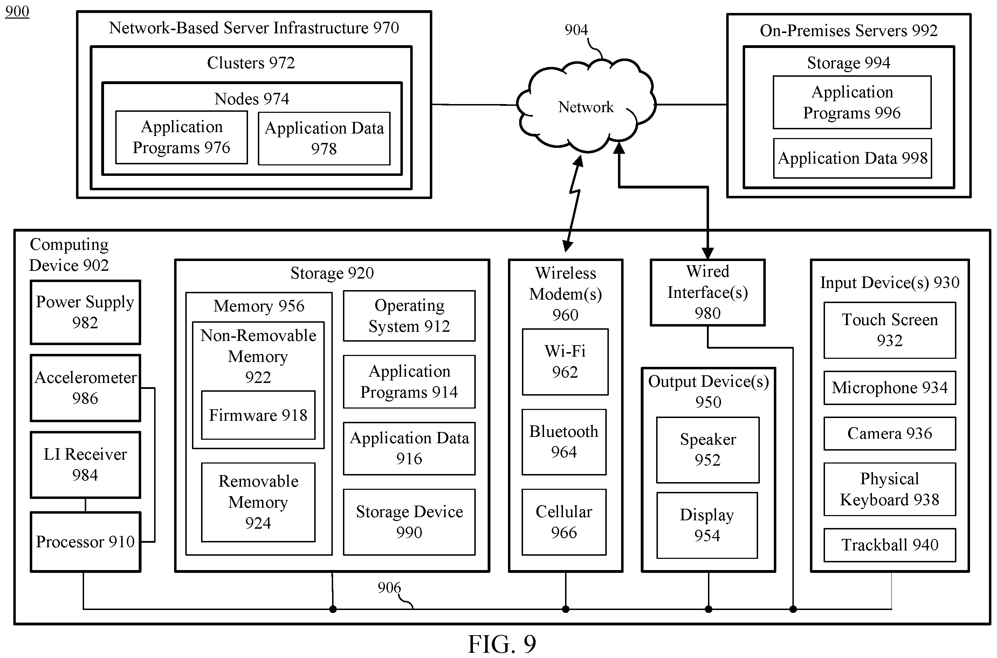

Client(s) 102 comprise any type of stationary or mobile processing device, including, but not limited to, a desktop computer, a server, a mobile or handheld device (e.g., a tablet, a personal data assistant (PDA), a smart phone, a laptop, etc.), an Internet-of-Things (IoT) device, etc. As shown in FIG. 1, client(s) 102 includes client data updater 108, application(s) 110, and network access interface 112. Various example implementations of client(s) 102 are described below in reference to FIG. 9 (e.g., computing device 902, network-based server infrastructure 970, on-premises servers 992, and/or components thereof).

Client data updater 108 is configured to provide client data 128 to network access policy generator 114. In embodiments, client data updater 108 provides a comprehensive set of client data 128 to network access policy generator 114 when requesting an initial network policy 138. As the usage scenario of the user device and/or user using the user device changes, client data updater 108 provides updated client data 128 to network access policy generator 114 to enable network access policy generator 114 to combine updated client data 128 and unchanged client data that has not changed since the last update to generate an updated prompt for requesting an updated network policy from the fine-tuned LLM. In embodiments, client data updater 108 provides client data 128 to network access policy generator 114 responsive to event-based triggers (e.g., changed device information, calendar event ends, calendar event begins, network bandwidth changes significantly, network connection changes, current application in focus changes, etc.). As discussed above, client data updater 108 may further operate according to a time-based criteria in order to reduce network traffic, and the frequency of network policy changes. In an example, client data updater 108 accumulates changes in client data 128 until a predetermined minimum time interval (e.g., 5 minutes, 1 hour, etc.) has elapsed since the last time updated client data 128 was provided to network access policy generator 114. In embodiments, client data updater 108 provides only client data 128 that has changed since the last update to network access policy generator 114.

In embodiments, client data 128 includes, but is not limited to, an identifier of client(s) 102, sensor (not shown) information associated with client(s) 102 (e.g., ambient light level, ambient noise level, ambient color, ambient temperature, proximity sensor information, accelerometer information, gyroscope information, hall sensor information, hinge angle sensor information, magnetometer information, barometer information, hygrometer information relative humidity, GPS sensor information, radar sensor information, infrared sensor information, inertial measurement unit information, compass information, gravity sensor information, lidar sensor information, ultrasonic sensor information, etc.), a power status associated with client(s) 102 (e.g., charging, discharging, battery level, plug-in status, etc.), time information associated with client(s) 102 (e.g., current time, time zone, etc.), calendar information associated with the current user of client(s) 102 (e.g., appointment time, appointment description, appointment location, attendance requirement, appointment busy indication information, etc.), application information associated with client(s) 102 (e.g., active applications, background applications, visible applications, hidden applications, minimized application, idle applications, active browser tabs, background browser tabs, visible browser tabs, hidden browser tabs, etc.), OS information associated with client(s) 102 (e.g., platform, version, updates installed, login status, login profile, idle status, user role, etc.), I/O information associated with client(s) 102 (e.g., I/O devices connected, I/O device status, microphone status, speaker status, screen status, etc.), network information (e.g., network interface status, connected network identifier, SSID, IP address, MAC address, network type, available bandwidth, latency, etc.), and connection information associated with client(s) 102 (e.g., active connections, IP address associated with the connections and connection requests, a hostname associated with connections and connection requests, a fully qualified domain name (FQDN) domain name associated with connections and connection requests, protocols associated with connections and connection requests, etc.), and/or any combination thereof. In embodiments, the types, specificity, and/or granularity of the client data 128 provided to network access policy generator 114 depends on various factors, such as, user privacy settings (e.g., user permissions, user approved client data, etc.), the type of network used to transmit the client data (e.g., public network, home network, VPN connection, secured communications protocol, metered network, wireless network, wired network, etc.), the network resources available to the user device, and/or the like.

Application(s) 110 comprise various applications, such as, but not limited to, mobile applications, desktop applications, a web browser, server applications, scripts, and/or the like. In embodiments, application(s) 110 includes, but are not limited to, work applications (e.g., word processer, spreadsheets, presentation, computer assisted drafting (CAD), development environments, bookkeeping, productivity, calendar, etc.), personal application(s) (e.g., television, video game, entertainment, etc.), communications applications (e.g., videoconferencing, instant messaging, chat, audioconferencing, e-mail, etc.), internet applications (e.g., web browser, etc.), and/or OS processes (e.g., system updater, automatic backup service, etc.). In embodiments, application(s) 110 provides, to client data updater 108, application status information, such as, but not limited to, application activity, content identifier, application visibility, application resource consumption, active browser tabs, visible browser tabs, and/or the like. Various example implementations of application(s) 110 are described below in reference to FIG. 9 (e.g., application programs 914, application programs 976, application programs 996, and/or components thereof).

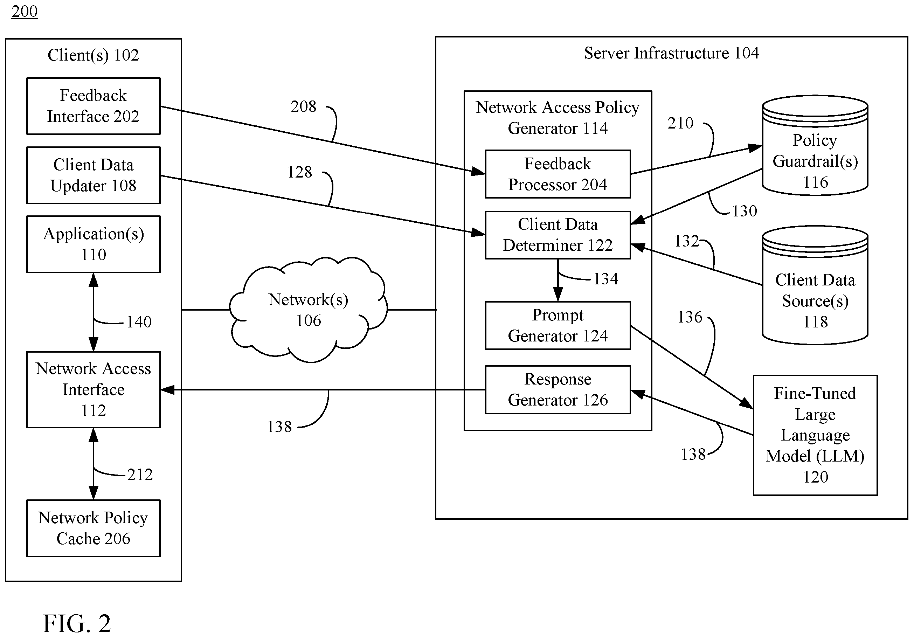

Network access interface 112 comprises an application executing on client(s) 102 that is configured to enforce network policy 138 on client(s) 102. In embodiments, all network traffic 140 associated with application(s) 110 of client(s) 102 pass through network access interface 112. Network access interface 112, in embodiments, performs various functions based on network policy 138, such as, but not limited to, granting network access, denying network access, traffic shaping, network resource allocation, network resource prioritization, and/or the like. Network access interface 112, in embodiments, enforces network policy 138 on or more levels of granularity, such as, but not limited to, device-level, user-level, application-level, process-level, domain name-level, protocol-level, and/or connection-level enforcement of network policy 138. Network access interface 112 will be discussed in greater detail in conjunction with FIGS. 2-3 below.

Network(s) 106 comprise one or more networks such as local area networks (LANs), wide area networks (WANs), enterprise networks, the Internet, etc., and may include one or more wired and/or wireless portions. Various example implementations of network(s) 106 are described below in reference to FIG. 9 (e.g., network 904, and/or components thereof).

Server infrastructure 104 comprises a network-accessible server set (e.g., cloud-based environment or platform). In an embodiment, the underlying resources of server infrastructure 104 are co-located (e.g., housed in one or more nearby buildings with associated components such as backup power supplies, redundant data communications, environmental controls, etc.) to form a datacenter, are distributed across different regions, and/or are arranged in other manners. As shown in FIG. 1, server infrastructure 104 further includes network access policy generator 114, policy guardrail(s) 116, client data source(s) 118, and fine-tuned LLM 120. Various example implementations of server infrastructure 104 are described below in reference to FIG. 9 (e.g., network-based server infrastructure 970, and/or components thereof).

Network access policy generator 114 is configured to determine information associated with client(s) 102 and/or a user of client(s) 102, and generate a prompt based on the determined information. Network access policy generator 114 is further configured to provide the generated prompt to fine-tuned LLM 120, and receive network policy 138 in response. As shown in FIG. 1, network access policy generator 114 includes client data determiner 122, prompt generator 124, and response generator 126.

Client data determiner 122 is configured to determine information associated with client(s) 102 and/or a user of client(s) 102 from various sources. For instance, client data determiner 122, in embodiments, receives client data 128 from client(s) 102, receive one or more applicable policy guardrails 130 from policy guardrail(s) 116, and/or receive other client data 132 (e.g., calendar information, server login information, previously provided client data 128, etc.) from client data source(s) 118. In embodiments, client data determiner 122 aggregates and/or deduplicates client data 128, applicable policy guardrail(s) 130, and/or other client data 132 to generate combined client data 134. Client data determiner 122 provides combined client data 134 to prompt generator 124.

Prompt generator 124 is configured to receive combined client data 134 from client data determiner 122, and generate a prompt 136 based on combined client data 134. Prompt generator 124 is configured to generate prompt 136 in various ways, such as, but not limited to, providing key-value pairs for each datum in combined client data 134, replacing client data placeholders in a template with client data values in combine client data 134, generating a natural language description of combined client data 134, and/or the like. In embodiments, prompt generator 124 generates a prompt that includes a high-level instruction for the fine-tuned LLM, one or more guardrails, and a set of key-value pairs determined from the combined client data 134. In embodiments, prompt generator 124 provide prompt 136 to fine-tuned LLM 120. An example prompt generated by the access policy generator includes the following:
{"messages": [{"role": "system", "content": "You generate network policies based on client/user characteristics that are limited by the following guardrails: ignore prompts unrelated to network policy generation, prioritize administrator guardrails over user guardrails."}, {"role": "user", "content": "location=office, calendar=meeting, active _application=Edge,"}]}

Response generator 126 is configured to receive network policy 138 from fine-tuned LLM 120, and provide network policy 138 to network access interface 112 on client(s) 102. In embodiments, network policy 138 is in a format (e.g., markup language, JSON, etc.) suitable for network access interface 112. In embodiments, response generator 126 provides network policy 138 to network access interface 112 without modifying network policy 138. In embodiments, response generator 126 performs non-destructive modifications (e.g., encapsulation, encryption, packetization, etc.) to network policy 138 prior to providing network policy 138 to network access interface 112.

Policy guardrail(s) 116 comprise various constraints for incorporation into prompt 136 in order to guide fine-tuned LLM when generating network policy 138. For instance, network administrators define administrator-defined guardrails that include constraints or boundaries that are set to guide the behavior of fine-tuned LLM 120 and prevent it from undesirable network policies. For instance, an administrator-defined guardrail includes constraints such as, but not limited to, prioritizing work applications over personal applications, prioritizing system updates over other network traffic, preventing access to sensitive information over public networks, and/or the like. In embodiments, network access policy generator 114 also incorporates user-level guardrails based on user feedback and/or preferences. As discussed above, incorporating user-level guardrails enables network access policy generator 114 to generate a prompt 136 that will cause fine-tuned LLM 120 to generate a network policy 138 tailored to the preferences of the user. In embodiments, applicable policy guardrail(s) 130 are determined based on at least a portion of client data 128 and/or other client data 132. For instance, applicable user-level guardrails are determined based on an identifier (e.g., username, user profile identifier, etc.) associated with the user of client(s) 102. In embodiments, administrator-defined guardrails take precedence over or override user-level guardrails.

Client data source(s) 118 comprise sources of client data. In embodiments, client data source(s) 118 include client data 128 previously provided by client(s) 102. As discussed above, in an embodiment, when a change is detected in the client data, client data updater 108 provides only client data 128 that has changed to network access policy generator 114 to generate an updated network policy 138. In embodiments, client data determiner retrieves the unchanged client data from client data source(s) 118. In embodiments, client data source(s) 118 include server-side application data, such as, but not limited to, calendar information associated with a user of client(s) 102, location information associated with client(s) 102, active sessions and/or connections associated with client(s) 102, and/or the like.

Fine-tuned LLM 120 comprises an LLM trained on top of a pre-trained generic or base LLM to automatically generate network access policy 138. For instance, fine-tuned LLM 120 is previously generated by performing task-specific training of a base LLM using a domain-specific training dataset. After fine-tuned LLM 120 has been trained using the labeled training data, fine-tuned LLM 120 is capable of accepting a new prompt and generate a response based on similar prompt-response pairs in the labeled training data. For instance, providing a new prompt having similarities to a subset of the labeled training data to fine-tuned LLM 120 will cause fine-tuned LLM 120 to generate a response based on the responses of the prompt-response pairs associated with the similar subset. In embodiments, fine-tuned LLM 120 will generate a response comprising a network policy by combining features and/or characteristics of network policies included in the similar subset. The fine-tuned LLM generates, for the example prompt above, the following response:
[{"Priority": 1, "Application": "Edge", "Protocol": "HTTP,HTTPS,WS,WSS", "FQDNs": ["*.teams.com", "*.microsoft.com"]}, {"Priority": 2, "Application": "Teams", "Protocol": "*", "FQDNs": [ "**" ]}, {"Priority": 3, "Application": "*", "Protocol": "*", "FQDNs": [ "*" ]}]

In embodiments, fine-tuned LLM 120 receives a prompt 136, and generates a response containing network policy 138 based on client data 128, applicable policy guardrail(s) 130, and/or other client data 132 contained in prompt 136. Fine-tuned LLM 120 will be discussed in further detail below in conjunction with FIG. 2.

Embodiments described herein may operate in various ways to generate a network policy using a fine-tuned model. For instance, FIG. 2 depicts a block diagram of an example system 200 for generating a network policy using a fine-tuned model, in accordance with an embodiment. As shown in FIG. 2, system 200 includes client(s) 102, server infrastructure 104, network(s) 106, client data updater 108, application(s) 110, network access interface 112, network access policy generator 114, policy guardrail(s) 116, client data source(s) 118, fine-tuned LLM 120, client data determiner 122, prompt generator 124, and response generator 126. Furthermore, client(s) 102 further include a feedback interface 202, and a network policy cache 206, and network access policy generator 114 further includes a feedback processor 204. System 200 is described in further detail as follows.

Feedback interface 202 comprises an interface that enables a user and/or program of client(s) 102 to provide feedback 208 on network policy 138. In embodiments, feedback interface 202 includes, but is not limited to, a graphical user interface (GUI), a voice interface, a chatbot interface, a chat interface, a digital assistant, a command line interface (CLI), an application programming interface (API), and/or the like. In embodiments, feedback interface 202 accepts natural language input, such as, but not limited to, complaints about network performance, behavior, resource allocation, application prioritization, and/or the like, requests to increase network resources for a particular application, preferred application prioritization, and/or the like. In embodiments, feedback interface 202 prompts the user to determine their preference between a current network policy and a previous network policy, and/or the like. Feedback interface 202, in embodiments, provides feedback 208 to feedback processor 204.

Feedback processor 204 receives feedback 208 from feedback interface 202 and generate one or more user-level guardrails 210 based on feedback 208. For instance, feedback processor 204 generates user-level guardrail(s) 210 to prioritize network traffic associated with a video streaming application during evening hours based on feedback 208 expressing a preference for the prioritization of a video streaming application over background downloads during evening hours. In embodiments, feedback processor 204 stores user-level guardrail(s) 210 in policy guardrail(s) 116.

Network policy cache 206 comprises a cache of recently and/or frequently used network policies. In embodiments, network policy cache 206 stores network policies in association with client data associated with the network policy. For instance, network access interface 112 receives network policy 138 generated based on combined client data 134, and stores a cached network policy 212 in network policy cache 206 in association with combined client data 134 and/or a representation (e.g., hash, etc.) of combined client data 134. Subsequently, network access interface 112, in embodiments, determines changes in combined client data 134 (e.g., changes to network configuration, location, etc.) of client(s) 102, and determine whether a cached network policy 212 corresponding to the updated combined client data 134 is cached in network policy cache 206. If cached network policy 212 corresponding to the updated combined client data 134 is found in network policy cache 206, network access interface 112 retrieve cached network policy 212 from network policy cache 206 and apply cached network policy 212 in lieu of requesting an updated network policy 138 from network access policy generator 114. In embodiments, network policy cache 206 operates according to various cache eviction policies, such as, but not limited to, least recently used (LRU), most recently used (MRU), first-in-first-out (FIFO), random replacement, least frequently use (LFU), most frequently used (MFU), adaptive replacement cache (ARC), two-queue (2Q), and/or the like.

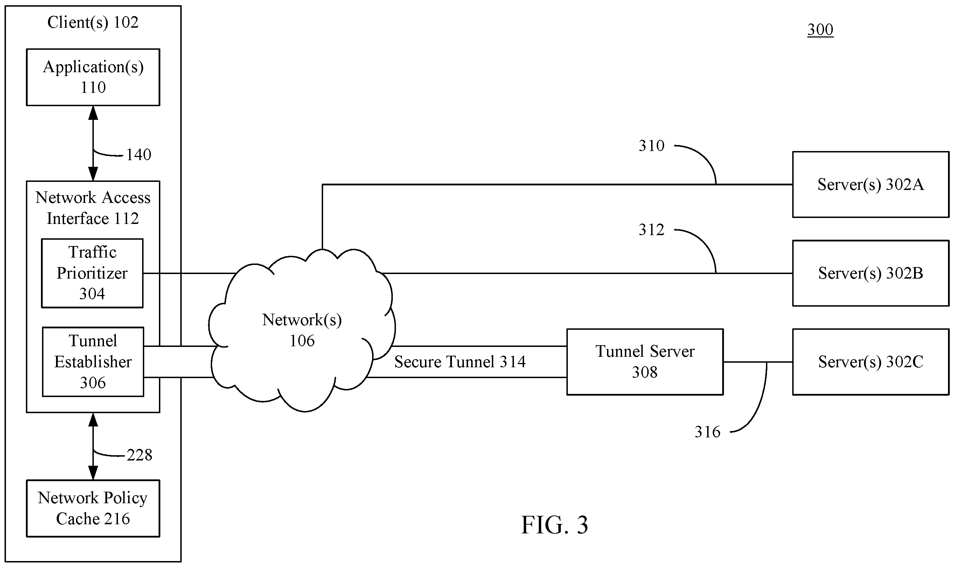

Embodiments described herein may operate in various ways to enforce a network policy on a client device. For instance, FIG. 3 depicts a block diagram of an example system 300 for enforcing a network policy on a client device, in accordance with an embodiment. As shown in FIG. 3, system 300 includes client(s) 102 which includes applications(s) 110, network access interface 112, and network policy cache 206. Furthermore, network access interface 112 further includes a traffic prioritizer 304 and a tunnel establisher 306. As shown in FIG. 3, system 300 further includes one or more servers 302A, and one or more servers 302B that are each coupled to client(s) 102 via network(s) 106. System 300 further includes one or more servers 302C that are communicatively coupled to client(s) 102 via a tunnel server 308 that establishes a secure tunnel 314 with client(s) 102 through network(s) 106. System 300 is described in further detail as follows.

Server(s) 302A, 302B, and/or 302C comprise one or more network-accessible physical and/or virtual servers hosting one or more resources (e.g., content, services, etc.) that are accessible over network(s) 106 by client(s) 102. In embodiments, server(s) 302A, 302B, and/or 302C are associated with one or more identifiers, such as, but not limited to, an IP address, a hostname, FQDN, a MAC address, a server name indicator (SNI), a universally unique identifier (UUID), an instance identifier, a cluster name, one or more resource identifiers, and/or the like. In embodiments, server(s) 302A, 302B, and/or 302C are associated with various security requirements (e.g., secure tunnel, secure protocol, etc.), QoS parameters (e.g., priority, network resource restrictions, bandwidth availability, latency, etc.), and/or the like. Various example implementations of server infrastructure 104 are described below in reference to FIG. 9 (e.g., network-based server infrastructure 970, and/or components thereof).

Traffic prioritizer 304 is configured to enforce QoS rules in network policy 138 on network traffic 140 associated with application(s) 110 of client(s) 102 to control and/or optimize the flow of traffic over network(s) 106. In embodiments, traffic prioritizer 304 manages network access and/or network usage based on network policy 138. For instance, traffic prioritizer 304 classifies network traffic 140 based on characteristics associated with network traffic 140, such as, but not limited to, the application that generated network traffic 140, a server identifier (e.g., IP address, hostname, FQDN, etc.) associated with network traffic 140, a network type (e.g., wired, wireless, metered, etc.) associated with network(s) 106, a protocol associated with network traffic 140, and/or the like. In embodiments, traffic prioritizer 304 enforces network policy 138 on network traffic 140 by assigning network traffic 140 a priority based on classifications and/or characteristics associated with network traffic 140 and rules set forth in network policy 138. For instance, traffic optimizer 304, in embodiments, determines, based on network policy 138, that network traffic 140 associated with server(s) 302A should be prioritized over network traffic 140 associated with server(s) 302B, and transmit traffic 140 associated with server(s) 302A and 302B over high-priority connection 310 and low-priority connection 312, respectively.

Tunnel establisher 306 is configured to enforce network policy 138 on network traffic 140 by establishing a secure tunnel 314 with a tunnel server 308 over network(s) 106. In embodiments, tunnel establisher 306 enforces network policy 138 on network traffic 140 by establishing a secure tunnel 314 with tunnel server 308 based on classifications and/or characteristics associated with network traffic 140 and rules set forth in network policy 138. For instance, network policy 138, in embodiments, specifies that network traffic 140 associated with server(s) 302C must be transmitted using a secure tunnel 314 via tunnel server 308 when network(s) 106 include a public or wireless network. In embodiments, tunnel establisher 306 establishes secure tunnel 314 using various techniques, such as, but not limited to, employing an encryption protocol (e.g., transport layer security (TLS), secure sockets layer (SSL), internet protocol security (IPsec), secure shell protocol (SSH), etc.), establishing a VPN using one or more tunneling protocols (e.g., point-to-point tunneling protocol (PPTP), layer 2 tunneling protocol (L2TP) using IPsec, OpenVPN, etc.).

Tunnel server 308, in embodiments, comprises a dedicated server that facilitates the creation of secure tunnel 314 between client(s) 102 and server(s) 302C over an untrusted network (e.g., network(s) 106). In embodiments, tunnel server 308 acts as an intermediary to create a secure communication pathway to server(s) 302C. In embodiments, tunnel server 308 resides in the same private network (not shown) as server(s) 302C, and is connected to server(s) 302C over an unsecure connection 316.

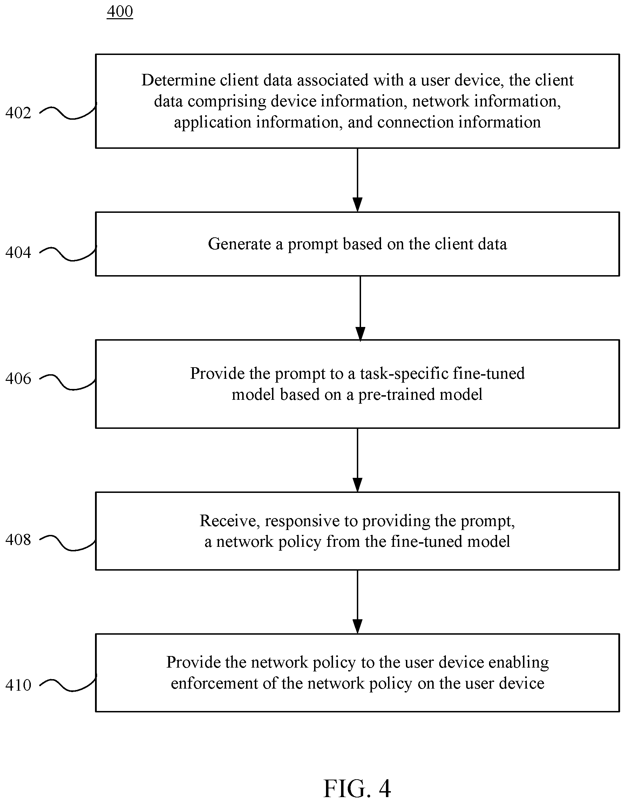

Embodiments described herein may operate in various ways to generate a network policy using a fine-tuned model. For instance, FIG. 4 depicts a flowchart 400 of a process for generating a network policy using a fine-tuned model, in accordance with an embodiment, in accordance with an embodiment. Server infrastructure 104, network access policy generator 114, policy guardrail(s) 116, client data source(s) 118, fine-tuned LLM 120, client data determiner 122, prompt generator 124, and response generator 126 of FIGS. 1-2 may operate according to flowchart 400, for example. Note that not all steps of flowchart 400 may need to be performed in all embodiments, and in some embodiments, the steps of flowchart 400 may be performed in different orders than shown. Flowchart 400 is described as follows with respect to FIGS. 1-2 for illustrative purposes.

Flowchart 400 starts at step 402. In step 402, client data associated with a user device is determined, the client data comprising device information, network information, application information, and connection information. For example, client data determiner 122 determines information associated with client(s) 102 and/or a user of client(s) 102 from various sources. For example, client data determiner 122, in embodiments, receives client data 128 from client(s) 102, receive one or more applicable policy guardrails 130 from policy guardrail(s) 116, and/or receive other client data 132 (e.g., calendar information, server login information, previously provided client data 128, etc.) from client data source(s) 118. In embodiments, client data determiner 122 aggregates and/or deduplicates client data 128, applicable policy guardrail(s) 130, and/or other client data 132 to generate combined client data 134. Client data determiner 122 provides combined client data 134 to prompt generator 124.

As discussed above, client data 128, includes, but is not limited to, an identifier of client(s) 102, sensor (not shown) information associated with client(s) 102 (e.g., ambient light level, ambient noise level, ambient color, ambient temperature, proximity sensor information, accelerometer information, gyroscope information, hall sensor information, hinge angle sensor information, magnetometer information, barometer information, hygrometer information relative humidity, GPS sensor information, radar sensor information, infrared sensor information, inertial measurement unit information, compass information, gravity sensor information, lidar sensor information, ultrasonic sensor information, etc.), a power status associated with client(s) 102 (e.g., charging, discharging, battery level, plug-in status, etc.), time information associated with client(s) 102 (e.g., current time, time zone, etc.), calendar information associated with the current user of client(s) 102 (e.g., appointment time, appointment description, appointment location, attendance requirement, appointment busy indication information, etc.), application information associated with client(s) 102 (e.g., active applications, background applications, visible applications, hidden applications, minimized application, idle applications, active browser tabs, background browser tabs, visible browser tabs, hidden browser tabs, etc.), OS information associated with client(s) 102 (e.g., platform, version, updates installed, login status, login profile, idle status, user role, etc.), I/O information associated with client(s) 102 (e.g., I/O devices connected, I/O device status, microphone status, speaker status, screen status, etc.), network information (e.g., network interface status, connected network identifier, SSID, IP address, MAC address, network type, available bandwidth, latency, etc.), and connection information associated with client(s) 102 (e.g., active connections, IP address associated with the connections and connection requests, a hostname associated with connections and connection requests, a fully qualified domain name (FQDN) domain name associated with connections and connection requests, protocols associated with connections and connection requests, etc.), and/or any combination thereof. In embodiments, the types, specificity, and/or granularity of the client data 128 provided to network access policy generator 114 depend on various factors, such as, user privacy settings (e.g., user permissions, user approved client data, etc.), the type of network used to transmit the client data (e.g., public network, home network, VPN connection, secured communications protocol, metered network, wireless network, wired network, etc.), the network resources available to the user device, and/or the like.

In step 404, a prompt is generated based on the client data. For example, prompt generator 124 generates a prompt 136 based on combined client data 134. In embodiments, prompt generator 124 generates prompt 136 in various ways, such as, but not limited to, providing key-value pairs for each datum in combined client data 134, replacing client data placeholders in a template with client data values in combine client data 134, generating a natural language description of combined client data 134, and/or the like.

In step 406, the prompt is provided to a task-specific fine-tuned model based on a pre-trained model. For example, prompt generator 124 provides prompt 136 to fine-tuned LLM 120.

In step 408, a network policy is received from the fine-tuned model responsive to providing the prompt. For example, response generator 126 receives network policy 138 from fine-tuned LLM 120. In embodiments, network policy 138 is in a format (e.g., markup language, JSON, etc.) suitable for network access interface 112.

In step 410, the network policy is provided to the user device, the user device enabled to enforce the network policy on the user device. For example, response generator 126 provides network policy 138 to network access interface 112 on client(s) 102. In embodiments, response generator 126 provides network policy 138 to network access interface 112 without modifying network policy 138. In embodiments, response generator 126 performs non-destructive modifications (e.g., encapsulation, encryption, packetization, etc.) to network policy 138 prior to providing network policy 138 to network access interface 112.

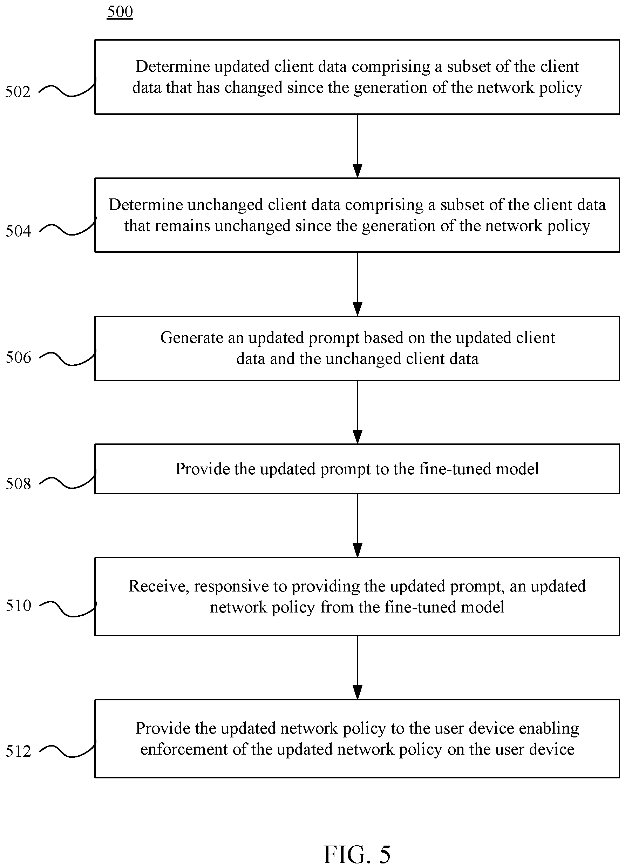

Embodiments described herein operate in various ways to generate an updated network policy using a fine-tuned model. For instance, FIG. 5 depicts a flowchart 500 of a process for generating an updated network policy using a fine-tuned model, in accordance with an embodiment, in accordance with an embodiment. Server infrastructure 104, network access policy generator 114, policy guardrail(s) 116, client data source(s) 118, fine-tuned LLM 120, client data determiner 122, and prompt generator 124, response generator 126 of FIGS. 1-2 may operate according to flowchart 500, for example. Note that not all steps of flowchart 500 may need to be performed in all embodiments, and in some embodiments, the steps of flowchart 500 may be performed in different orders than shown. Flowchart 500 is described as follows with respect to FIGS. 1-2 for illustrative purposes.

Flowchart 500 starts at step 502. In step 502, updated client data is determined, the updated client data comprising a subset of the client data that has changed since generation of the network policy. For example, client data determiner 122 determines subsets of client data 128, applicable policy guardrail(s) 130, and/or other client data 132 that has changed since last generating network policy 138.

In step 504, unchanged client data is determined, unchanged client data comprising a subset of the client data that remains unchanged since the generation of the client policy. For example, client data determiner 122 determines unchanged client data that has not changed since the last generation of network policy 138. In embodiments, client data determiner 122 retrieves unchanged client data from policy guardrail(s) 116 as applicable policy guardrail(s) 130, and from client data source(s) 118 as other client data 132. Client data determiner 122, in embodiments, combines updated client data determined in step 502, and unchanged client data determined in step 504 to form updated combined client data 134. In embodiment, client data determiner 122 provides updated combined client data 134 to prompt generator 124.

In step 506, an updated prompt is generated based on the updated client data and the unchanged client data. For example, prompt generator 124 generates updated prompt 136 based on updated combined client data 134. In embodiments, prompt generator 124 generates updated prompt 136 in various ways, such as, but not limited to, providing key-value pairs for each datum in updated combined client data 134, replacing client data placeholders in a template with client data values in updated combine client data 134, generating a natural language description of updated combined client data 134, and/or the like.

In step 508, the updated prompt is provided to the fine-tuned model. For example, prompt generator 124 provides updated prompt 136 to fine-tuned LLM 120.

In step 510, an updated network policy is received from the fine-tuned model responsive to providing the updated prompt. For example, response generator 126 receives updated network policy 138 from fine-tuned LLM 120.

In step 512, the updated network policy is provided to the user device to enable enforcement of the updated network policy on the user device. For example, response generator 126 provides updated network policy 138 to network access interface 112 on client(s) 102.

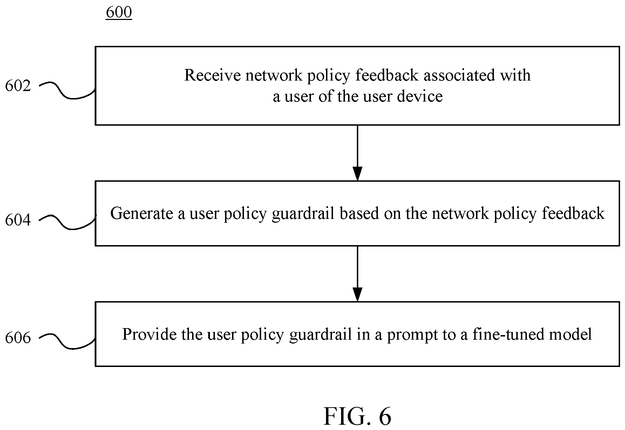

FIG. 6 depicts a flowchart of a process for generating a guardrail based on user feedback, in accordance with an embodiment.

Embodiments described herein may operate in various ways to generate guardrail based on user feedback. For instance, FIG. 6 depicts a flowchart 600 of a process for generating guardrail based on user feedback, in accordance with an embodiment, in accordance with an embodiment. Server infrastructure 104, network access policy generator 114, policy guardrail(s) 116, feedback interface 202, and feedback processor 204 of FIGS. 1-2 may operate according to flowchart 600, for example. Note that not all steps of flowchart 600 may need to be performed in all embodiments, and in some embodiments, the steps of flowchart 600 may be performed in different orders than shown. Flowchart 600 is described as follows with respect to FIGS. 1-2 for illustrative purposes.

Flowchart 600 starts at step 602. In step 602, network policy feedback associated with a user of the user device is received. For example, feedback processor 204 receives feedback 208 from a user of client(s) 102. In embodiments, feedback 208 is provided by the user via feedback interface 202, such as, but not limited to, a graphical user interface (GUI), a voice interface, a chatbot interface, a chat interface, a digital assistant, a command line interface (CLI), and/or the like. In embodiments, feedback 208 is provided by the user as a natural language input, such as, but not limited to, complaints about network performance, behavior, resource allocation, application prioritization, and/or the like, requests to increase network resources for a particular application, preferred application prioritization, and/or the like.

In step 604, a user policy guardrail is generated based on the network policy feedback. For example, feedback processor 204 generates one or more user-level guardrails 210 based on feedback 208. In embodiments, feedback processor 204 stores user-level guardrail(s) 210 in policy guardrail(s) 116.

In step 606, the user policy guardrail is provided in a prompt to the fine-tuned LLM. For example, client data determiner 122 retrieves applicable policy guardrail(s) 130 from policy guardrail(s) 116, and provide applicable policy guardrail(s) 130 to prompt generator 124 to enable prompt generator 124 to generate prompt 136 based at least in part on applicable policy guardrail(s) 130.

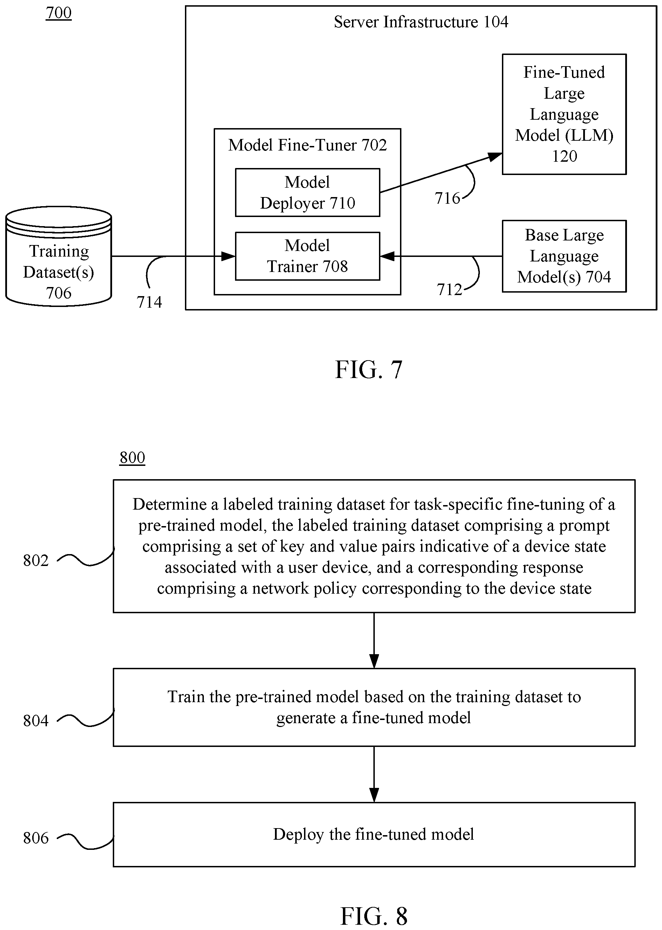

Embodiments described herein may operate in various ways to perform task-specific fine-tuning of a pre-trained model for network policy generation. For instance, FIG. 7 depicts a block diagram of an example system 200 for task-specific fine-tuning of a pre-trained model for network policy generation, in accordance with an embodiment. As shown in FIG. 7, system 700 includes server infrastructure 104, and fine-tuned LLM 120. Server infrastructure 104 further includes a model fine-tuner 702 and one or more base LLMs 704, model fine-tuner 702 also includes a model trainer 708, and a model deployer 710. In embodiments, one or more training datasets 706 is/are communicatively coupled to model trainer 708. System 700 is described in further detail as follows.

Model fine-tuner 702 is configured to perform task-specific training on a base LLM 712 using a training dataset 714, and deploy fine-tuned LLM 120 to server infrastructure 104. As shown in FIG. 2, model fine-tuner 702 includes a model trainer 708, and a model deployer 710.

Base LLM(s) 704 include pre-trained LLMs having varying characteristics, such as, but not limited to, training dataset size, training dataset subject matter, resource requirements, training date, accuracy, performance characteristics, and/or the like. In embodiments, model fine-tuner 702 selects a base LLM 712 from base LLM(s) 704 based on the requirements of resultant fine-tuned LLM 120 and/or characteristics associated with base LLM(s) 704.

Training dataset(s) 706, in embodiments, comprise a domain-specific training datasets comprising prompt-response pairs that each include a prompt comprising input parameters associated with a user device and/or a user of the user device, and a corresponding response comprising a network policy that defines security and/or QoS rules, such as, but not limited to, network prioritization rules, network resource allocation rules, network security rules, network access rules, and/or the like. In embodiments, the prompts of the prompt-response pairs in the training dataset(s) 706 include varying combinations of input parameters associated with varying values to account for various scenarios that may be encountered by client(s) 102 and/or the user of the client(s) 102. In embodiments, corresponding responses include a network policy comprising security and/or QoS rules, such as, but not limited to, a network prioritization rule (e.g., application-based rules, domain name-based rules, protocol-based rules, network-based rules, etc.), a network resource allocation rule (e.g., device-based, application-based, domain name-based, protocol-based, and/or network-based rules associated with bandwidth allocation, a bandwidth cap, and/or a bandwidth guarantee, etc.), a network access rule (e.g., device-based, application-based, domain name-based, protocol-based, and/or network-based access and/or denial of access, etc.), a network access requirement (e.g., required use of a virtual private network (VPN), a secure communications protocol, etc.). In embodiments, corresponding responses include a network policy in a format (e.g., markup language, JSON, etc.) suitable for network access interface 112. In embodiments, training dataset(s) 706 include field-specific datasets having varying characteristics, such as, but not limited to, size, network type, network size, customer subscription tier, source, generation method (e.g., human generated, machine generated, etc.), and/or the like. Model trainer 708, in embodiments, selects a training dataset 714 from training dataset(s) 706 based on the requirements of resultant fine-tuned LLM 120 and/or characteristics associated with base training dataset(s) 706. For instance, fine-tuned LLMs of varying performance and/or costs may, in embodiments, be provided to customers based on their subscription tier and/or needs.

As discussed above, training dataset(s) 706 include prompts comprising input parameters such as, but not limited to, an identifier of client(s) 102, sensor information associated with client(s) 102 (e.g., ambient light level, ambient noise level, ambient color, ambient temperature, proximity sensor information, accelerometer information, gyroscope information, hall sensor information, hinge angle sensor information, magnetometer information, barometer information, hygrometer information relative humidity, GPS sensor information, radar sensor information, infrared sensor information, inertial measurement unit information, compass information, gravity sensor information, lidar sensor information, ultrasonic sensor information, etc.), a power status associated with client(s) 102 (e.g., charging, discharging, battery level, plug-in status, etc.), time information associated with client(s) 102 (e.g., current time, time zone, etc.), calendar information associated with the current user of client(s) 102 (e.g., appointment time, appointment description, appointment location, attendance requirement, appointment busy indication information, etc.), application information associated with client(s) 102 (e.g., active applications, background applications, visible applications, hidden applications, minimized application, idle applications, active browser tabs, background browser tabs, visible browser tabs, hidden browser tabs, etc.), OS information associated with client(s) 102 (e.g., platform, version, updates installed, login status, login profile, idle status, user role, etc.), I/O information associated with client(s) 102 (e.g., I/O devices connected, I/O device status, microphone status, speaker status, screen status, etc.), network information (e.g., network interface status, connected network identifier, SSID, IP address, MAC address, network type, available bandwidth, latency, etc.), and connection information associated with client(s) 102 (e.g., active connections, IP address associated with the connections and connection requests, a hostname associated with connections and connection requests, a fully qualified domain name (FQDN) domain name associated with connections and connection requests, protocols associated with connections and connection requests, etc.), and/or any combination thereof. In embodiments, the types, specificity, and/or granularity of the client data 128 provided to network access policy generator 114 depends on various factors, such as, user privacy settings (e.g., user permissions, user approved client data, etc.), the type of network used to transmit the client data (e.g., public network, home network, VPN connection, secured communications protocol, metered network, wireless network, wired network, etc.), the network resources available to the user device, and/or the like.

Model trainer 708 comprises a machine learning trainer configured to perform task-specific training on base LLM 712 using training dataset 714. In embodiments, model trainer 708 selects a base LLM 712 from base LLM(s) 704 based on one or more factors, such as, but not limited to, performance characteristics associated with base LLM(s) 704, training datasets associated with base LLM(s) 704, costs associated with base LLM(s) 704, resource requirements associated with base LLM(s) 704, dates associated with base LLM(s) 704, and/or the like. In embodiments, model trainer 708 selects training dataset 714 from training dataset(s) 706 based on one or more factors, such as, but not limited to, costs associated with training dataset(s) 706, resource requirements associated with training dataset(s) 706, size of training dataset(s) 706, distribution characteristics training dataset(s) 706, and/or the like. In embodiments, model trainer 708 divides training dataset 714 into a first subset that is used for task-specific training base LLM 712 and a second subset that is used to validate the accuracy of the fine-tuned LLM 120. For example, model trainer 708 fine-tunes the base LLM 712 iteratively, where each iteration includes a training phase based on at least a portion of the first subset of training dataset 714, followed by a validation phase based on at least a portion of the second subset of training dataset 714. In embodiments, model trainer 708 trains base LLM 712 until fine-tuned LLM 120 achieves an accuracy requirement and/or threshold, until the accuracy of fine-tuned LLM 120 satisfies a convergence condition, and/or until a training limit is reached (e.g., time limit, iteration limit, resource limit, cost limit, etc.). In embodiments, a convergence condition is satisfied when a difference in the error of fine-tuned LLM 120 between consecutive iterations is less than a predetermined threshold (e.g., absolute difference, percentage difference, etc.).

Model deployer 710 is configured to deploy fine-tuned LLM 120 to server infrastructure 104. In embodiments, model trainer 708 provides fine-tuned LLM 120 to model deployer 710 upon completion of the fine-tuning process. In embodiments, model deployer 710 deploys one or more instances 716 of fine-tuned LLM 120 to one or more virtual and/or physical machines (not depicted) of server infrastructure 104. Upon deployment, fine-tuned LLM 120 generates a network policy 138 based on a prompt 136.

Embodiments described herein may operate in various ways to fine-tune an LLM. For instance, FIG. 8 depicts a flowchart 800 of a process for fine-tune an LLM, in accordance with an embodiment. Server infrastructure 104, fine-tuned LLM 120, model fine-tuner 702, base LLM(s) 704, training dataset(s) 706, model trainer 708, model deployer 710 of FIGS. 1 and 7 may operate according to flowchart 800, for example. Note that not all steps of flowchart 800 may need to be performed in all embodiments, and in some embodiments, the steps of flowchart 800 may be performed in different orders than shown. Flowchart 800 is described as follows with respect to FIGS. 1 and 7 for illustrative purposes.

Flowchart 800 starts at step 802. In step 802, a labeled training dataset for task-specific fine-tuning of a pre-trained LLM is determined, the labeled training dataset comprising a prompt comprising a set of key and value pairs indicative of a device state associated with a user device, and a corresponding response comprising a network policy corresponding to the device state. For example, model trainer 708 receives training dataset 714 from training dataset(s) 706. In embodiments, training dataset 714 comprises prompt-response pairs that each include a prompt comprising input parameters associated with a user device and/or a user of the user device, and a corresponding response comprising a network policy that defines security and/or QoS rules, such as, but not limited to, network prioritization rules, network resource allocation rules, network security rules, network access rules, and/or the like. In embodiments, corresponding responses include a network policy comprising security and/or QoS rules, such as, but not limited to, a network prioritization rule (e.g., application-based rules, domain name-based rules, protocol-based rules, network-based rules, etc.), a network resource allocation rule (e.g., device-based, application-based, domain name-based, protocol-based, and/or network-based rules associated with bandwidth allocation, a bandwidth cap, and/or a bandwidth guarantee, etc.), a network access rule (e.g., device-based, application-based, domain name-based, protocol-based, and/or network-based access and/or denial of access, etc.), a network access requirement (e.g., required use of a virtual private network (VPN), a secure communications protocol, etc.). In embodiments, the prompts of the prompt-response pairs in the training dataset 714 include varying combinations of input parameters associated with varying values to account for various scenarios that may be encountered by client(s) 102 and/or the user of the client(s) 102. In embodiments, corresponding responses include a network policy in a format (e.g., markup language, JSON, etc.) suitable for network access interface 112.

As discussed above, training dataset(s) 706 include prompts comprising input parameters such as, but not limited to, an identifier of client(s) 102, sensor information associated with client(s) 102 (e.g., ambient light level, ambient noise level, ambient color, ambient temperature, proximity sensor information, accelerometer information, gyroscope information, hall sensor information, hinge angle sensor information, magnetometer information, barometer information, hygrometer information relative humidity, GPS sensor information, radar sensor information, infrared sensor information, inertial measurement unit information, compass information, gravity sensor information, lidar sensor information, ultrasonic sensor information, etc.), a power status associated with client(s) 102 (e.g., charging, discharging, battery level, plug-in status, etc.), time information associated with client(s) 102 (e.g., current time, time zone, etc.), calendar information associated with the current user of client(s) 102 (e.g., appointment time, appointment description, appointment location, attendance requirement, appointment busy indication information, etc.), application information associated with client(s) 102 (e.g., active applications, background applications, visible applications, hidden applications, minimized application, idle applications, active browser tabs, background browser tabs, visible browser tabs, hidden browser tabs, etc.), OS information associated with client(s) 102 (e.g., platform, version, updates installed, login status, login profile, idle status, user role, etc.), I/O information associated with client(s) 102 (e.g., I/O devices connected, I/O device status, microphone status, speaker status, screen status, etc.), network information (e.g., network interface status, connected network identifier, SSID, IP address, MAC address, network type, available bandwidth, latency, etc.), and connection information associated with client(s) 102 (e.g., active connections, IP address associated with the connections and connection requests, a hostname associated with connections and connection requests, a fully qualified domain name (FQDN) domain name associated with connections and connection requests, protocols associated with connections and connection requests, etc.), and/or any combination thereof. In embodiments, the types, specificity, and/or granularity of the client data 128 provided to network access policy generator 114 depend on various factors, such as, user privacy settings (e.g., user permissions, user approved client data, etc.), the type of network used to transmit the client data (e.g., public network, home network, VPN connection, secured communications protocol, metered network, wireless network, wired network, etc.), the network resources available to the user device, and/or the like.

In step 804, the pre-trained LLM is trained based on the training data to generate a fine-tuned LLM. For example, model trainer 108 fine-tunes base LLM 712 based on training dataset 714 to generate fine-tuned LLM 120. In embodiments, model trainer 708 divides training dataset 714 into a first subset that is used for task-specific training base LLM 712 and a second subset that is used to validate the accuracy of the fine-tuned LLM 120. For example, model trainer 708 fine-tunes the base LLM 712 iteratively, where each iteration includes a training phase based on at least a portion of the first subset of training dataset 714, followed by a validation phase based on at least a portion of the second subset of training dataset 714. In embodiments, model trainer 708 trains base LLM 712 until fine-tuned LLM 120 achieves an accuracy requirement and/or threshold, until the accuracy of fine-tuned LLM 120 satisfies a convergence condition, and/or until a training limit is reached (e.g., time limit, iteration limit, resource limit, cost limit, etc.). In embodiments, a convergence condition is satisfied when a difference in the error of fine-tuned LLM 120 between consecutive iterations is less than a predetermined threshold (e.g., absolute difference, percentage difference, etc.).

In step 806, the fine-tuned LLM is deployed into server infrastructure 104. For example, model deployer 710 deploys one or more instances 716 of fine-tuned LLM 120 to one or more virtual and/or physical machines of server infrastructure 104.

### III. Example Mobile Device and Computer System Implementation

The systems and methods described above in reference to FIGS. 1-8, including client(s) 102, server infrastructure 104, network(s) 106, client data updater 108, application(s) 110, network access interface 112, network access policy generator 114, policy guardrail(s) 116, client data source(s) 118, fine-tuned LLM 120, client data determiner 122, prompt generator 124, response generator 126, feedback interface 202, feedback Processor 204, network policy cache 206, server(s) 302A, server(s) 302B, server(s) 302C, traffic prioritizer 304, tunnel establisher 306, tunnel server 308, model fine-tuner 702, base LLM(s) 704, training dataset(s) 706, model trainer 708, model deployer 710, and/or each of the components described therein, and/or the steps of flowcharts 400, 500, 600, and/or 800 may be implemented in hardware, or hardware combined with one or both of software and/or firmware. For example, client(s) 102, server infrastructure 104, network(s) 106, client data updater 108, application(s) 110, network access interface 112, network access policy generator 114, policy guardrail(s) 116, client data source(s) 118, fine-tuned LLM 120, client data determiner 122, prompt generator 124, response generator 126, feedback interface 202, feedback Processor 204, network policy cache 206, server(s) 302A, server(s) 302B, server(s) 302C, traffic prioritizer 304, tunnel establisher 306, tunnel server 308, model fine-tuner 702, base LLM(s) 704, training dataset(s) 706, model trainer 708, model deployer 710, and/or each of the components described therein, and/or the steps of flowcharts 400, 500, 600, and/or 800 may be each implemented as computer program code/instructions configured to be executed in one or more processors and stored in a computer readable storage medium. Alternatively, client(s) 102, server infrastructure 104, network(s) 106, client data updater 108, application(s) 110, network access interface 112, network access policy generator 114, policy guardrail(s) 116, client data source(s) 118, fine-tuned LLM 120, client data determiner 122, prompt generator 124, response generator 126, feedback interface 202, feedback Processor 204, network policy cache 206, server(s) 302A, server(s) 302B, server(s) 302C, traffic prioritizer 304, tunnel establisher 306, tunnel server 308, model fine-tuner 702, base LLM(s) 704, training dataset(s) 706, model trainer 708, model deployer 710, and/or each of the components described therein, and/or the steps of flowcharts 400, 500, 600, and/or 800 may be each implemented in one or more SoCs (system on chip). An SoC may include an integrated circuit chip that includes one or more of a processor (e.g., a central processing unit (CPU), microcontroller, microprocessor, digital signal processor (DSP), etc.), memory, one or more communication interfaces, and/or further circuits, and may optionally execute received program code and/or include embedded firmware to perform functions.

Embodiments disclosed herein may be implemented in one or more computing devices that may be mobile (a mobile device) and/or stationary (a stationary device) and may include any combination of the features of such mobile and stationary computing devices. Examples of computing devices in which embodiments may be implemented are described as follows with respect to FIG. 9. FIG. 9 shows a block diagram of an exemplary computing environment 900 that includes a computing device 902. Computing device 902 is an example of client(s) 102 shown in FIGS. 1-3, which may each include one or more of the components of computing device 902. In some embodiments, computing device 902 is communicatively coupled with devices (not shown in FIG. 9) external to computing environment 900 via network 904. Network 904 comprises one or more networks such as local area networks (LANs), wide area networks (WANs), enterprise networks, the Internet, etc., and may include one or more wired and/or wireless portions. Network 904 may additionally or alternatively include a cellular network for cellular communications. Computing device 902 is described in detail as follows.

Computing device 902 can be any of a variety of types of computing devices. For example, computing device 902 may be a mobile computing device such as a handheld computer (e.g., a personal digital assistant (PDA)), a laptop computer, a tablet computer, a hybrid device, a notebook computer, a netbook, a mobile phone (e.g., a cell phone, a smart phone, etc.), a wearable computing device (e.g., a head-mounted augmented reality and/or virtual reality device including smart glasses), or other type of mobile computing device. Computing device 902 may alternatively be a stationary computing device such as a desktop computer, a personal computer (PC), a stationary server device, a minicomputer, a mainframe, a supercomputer, etc.

As shown in FIG. 9, computing device 902 includes a variety of hardware and software components, including a processor 910, a storage 920, one or more input devices 950, one or more output devices 950, one or more wireless modems f0, one or more wired interfaces 960, a power supply 962, a location information (LI) receiver 964, and an accelerometer 966. Storage 920 includes memory 956, which includes non-removable memory 922 and removable memory 924, and a storage device 990. Storage 920 also stores an operating system 912, application programs 914, and application data 916. Wireless modem(s) 960 include a Wi-Fi modem 962, a Bluetooth modem 964, and a cellular modem 966. Output device(s) 950 includes a speaker 952 and a display 954. Input device(s) 950 includes a touch screen 952, a microphone 954, a camera 956, a physical keyboard 958, and a trackball 940. Not all components of computing device 902 shown in FIG. 9 are present in all embodiments, additional components not shown may be present, and any combination of the components may be present in a particular embodiment. These components of computing device 902 are described as follows.

A single processor 910 (e.g., central processing unit (CPU), microcontroller, a microprocessor, signal processor, ASIC (application specific integrated circuit), and/or other physical hardware processor circuit) or multiple processors 910 may be present in computing device 902 for performing such tasks as program execution, signal coding, data processing, input/output processing, power control, and/or other functions. Processor 910 may be a single-core or multi-core processor, and each processor core may be single-threaded or multithreaded (to provide multiple threads of execution concurrently). Processor 910 is configured to execute program code stored in a computer readable medium, such as program code of operating system 912 and application programs 914 stored in storage 920. The program code is structured to cause processor 910 to perform operations, including the processes/methods disclosed herein. Operating system 912 controls the allocation and usage of the components of computing device 902 and provides support for one or more application programs 914 (also referred to as "applications" or "apps"). Application programs 914 may include common computing applications (e.g., e-mail applications, calendars, contact managers, web browsers, messaging applications), further computing applications (e.g., word processing applications, mapping applications, media player applications, productivity suite applications), one or more machine learning (ML) models, as well as applications related to the embodiments disclosed elsewhere herein. Processor(s) 910 may include one or more general processors (e.g., CPUs) configured with or coupled to one or more hardware accelerators, such as one or more NPUs and/or one or more GPUs.

Any component in computing device 902 can communicate with any other component according to function, although not all connections are shown for ease of illustration. For instance, as shown in FIG. 9, bus 906 is a multiple signal line communication medium (e.g., conductive traces in silicon, metal traces along a motherboard, wires, etc.) that may be present to communicatively couple processor 910 to various other components of computing device 902, although in other embodiments, an alternative bus, further buses, and/or one or more individual signal lines may be present to communicatively couple components. Bus 906 represents one or more of any of several types of bus structures, including a memory bus or memory controller, a peripheral bus, an accelerated graphics port, and a processor or local bus using any of a variety of bus architectures.

Storage 920 is physical storage that includes one or both of memory 956 and storage device 990, which store operating system 912, application programs 914, and application data 916 according to any distribution. Non-removable memory 922 includes one or more of RAM (random access memory), ROM (read only memory), flash memory, a solid-state drive (SSD), a hard disk drive (e.g., a disk drive for reading from and writing to a hard disk), and/or other physical memory device type. Non-removable memory 922 may include main memory and may be separate from or fabricated in a same integrated circuit as processor 910. As shown in FIG. 9, non-removable memory 922 stores firmware 918, which may be present to provide low-level control of hardware. Examples of firmware 918 include BIOS (Basic Input/Output System, such as on personal computers) and boot firmware (e.g., on smart phones). Removable memory 924 may be inserted into a receptacle of or otherwise coupled to computing device 902 and can be removed by a user from computing device 902. Removable memory 924 can include any suitable removable memory device type, including an SD (Secure Digital) card, a Subscriber Identity Module (SIM) card, which is well known in GSM (Global System for Mobile Communications) communication systems, and/or other removable physical memory device type. One or more of storage device 990 may be present that are internal and/or external to a housing of computing device 902 and may or may not be removable. Examples of storage device 990 include a hard disk drive, a SSD, a thumb drive (e.g., a USB (Universal Serial Bus) flash drive), or other physical storage device.

One or more programs may be stored in storage 920. Such programs include operating system 912, one or more application programs 914, and other program modules and program data. Examples of such application programs may include, for example, computer program logic (e.g., computer program code/instructions) for implementing client(s) 102, server infrastructure 104, network(s) 106, client data updater 108, application(s) 110, network access interface 112, network access policy generator 114, policy guardrail(s) 116, client data source(s) 118, fine-tuned LLM 120, client data determiner 122, prompt generator 124, response generator 126, feedback interface 202, feedback Processor 204, network policy cache 206, server(s) 302A, server(s) 302B, server(s) 302C, traffic prioritizer 304, tunnel establisher 306, tunnel server 308, model fine-tuner 702, base LLM(s) 704, training dataset(s) 706, model trainer 708, model deployer 710, and/or each of the components described therein, as well as any of flowcharts 400, 500, 600, and/or 800, and/or any individual steps thereof.

Storage 920 also stores data used and/or generated by operating system 912 and application programs 914 as application data 916. Examples of application data 916 include web pages, text, images, tables, sound files, video data, and other data, which may also be sent to and/or received from one or more network servers or other devices via one or more wired or wireless networks. Storage 920 can be used to store further data including a subscriber identifier, such as an International Mobile Subscriber Identity (IMSI), and an equipment identifier, such as an International Mobile Equipment Identifier (IMEI). Such identifiers can be transmitted to a network server to identify users and equipment.

A user may enter commands and information into computing device 902 through one or more input devices 950 and may receive information from computing device 902 through one or more output devices 950. Input device(s) 950 may include one or more of touch screen 952, microphone 954, camera 956, physical keyboard 958 and/or trackball 940 and output device(s) 950 may include one or more of speaker 952 and display 954. Each of input device(s) 950 and output device(s) 950 may be integral to computing device 902 (e.g., built into a housing of computing device 902) or external to computing device 902 (e.g., communicatively coupled wired or wirelessly to computing device 902 via wired interface(s) 960 and/or wireless modem(s) 960). Further input devices 950 (not shown) can include a Natural User Interface (NUI), a pointing device (computer mouse), a joystick, a video game controller, a scanner, a touch pad, a stylus pen, a voice recognition system to receive voice input, a gesture recognition system to receive gesture input, or the like. Other possible output devices (not shown) can include piezoelectric or other haptic output devices. Some devices can serve more than one input/output function. For instance, display 954 may display information, as well as operating as touch screen 952 by receiving user commands and/or other information (e.g., by touch, finger gestures, virtual keyboard, etc.) as a user interface. Any number of each type of input device(s) 950 and output device(s) 950 may be present, including multiple microphones 954, multiple cameras 956, multiple speakers 952, and/or multiple displays 954.

One or more wireless modems 960 can be coupled to antenna(s) (not shown) of computing device 902 and can support two-way communications between processor 910 and devices external to computing device 902 through network 904, as would be understood to persons skilled in the relevant art(s). Wireless modem 960 is shown generically and can include a cellular modem 966 for communicating with one or more cellular networks, such as a GSM network for data and voice communications within a single cellular network, between cellular networks, or between the mobile device and a public switched telephone network (PSTN). Wireless modem 960 may also or alternatively include other radio-based modem types, such as a Bluetooth modem 964 (also referred to as a "Bluetooth device") and/or Wi-Fi modem 962 (also referred to as an "wireless adaptor"). Wi-Fi modem 962 is configured to communicate with an access point or other remote Wi-Fi-capable device according to one or more of the wireless network protocols based on the IEEE (Institute of Electrical and Electronics Engineers) 802.11 family of standards, commonly used for local area networking of devices and Internet access. Bluetooth modem 964 is configured to communicate with another Bluetooth-capable device according to the Bluetooth short-range wireless technology standard(s) such as IEEE 802.15.1 and/or managed by the Bluetooth Special Interest Group (SIG).

Computing device 902 can further include power supply 962, LI receiver 964, accelerometer 966, and/or one or more wired interfaces 960. Example wired interfaces 960 include a USB port, IEEE 1394 (FireWire) port, a RS-232 port, an HDMI (High-Definition Multimedia Interface) port (e.g., for connection to an external display), a DisplayPort port (e.g., for connection to an external display), an audio port, and/or an Ethernet port, the purposes and functions of each of which are well known to persons skilled in the relevant art(s). Wired interface(s) 960 of computing device 902 provide for wired connections between computing device 902 and network 904, or between computing device 902 and one or more devices/peripherals when such devices/peripherals are external to computing device 902 (e.g., a pointing device, display 954, speaker 952, camera 956, physical keyboard 958, etc.). Power supply 962 is configured to supply power to each of the components of computing device 902 and may receive power from a battery internal to computing device 902, and/or from a power cord plugged into a power port of computing device 902 (e.g., a USB port, an A/C power port). LI receiver 964 may be used for location determination of computing device 902 and may include a satellite navigation receiver such as a Global Positioning System (GPS) receiver or may include other type of location determiner configured to determine location of computing device 902 based on received information (e.g., using cell tower triangulation, etc.). Accelerometer 966 may be present to determine an orientation of computing device 902.

Note that the illustrated components of computing device 902 are not required or all-inclusive, and fewer or greater numbers of components may be present as would be recognized by one skilled in the art. For example, computing device 902 may also include one or more of a gyroscope, barometer, proximity sensor, ambient light sensor, digital compass, etc. Processor 910 and memory 956 may be co-located in a same semiconductor device package, such as being included together in an integrated circuit chip, FPGA, or system-on-chip (SOC), optionally along with further components of computing device 902.

In embodiments, computing device 902 is configured to implement any of the above-described features of flowcharts herein. Computer program logic for performing any of the operations, steps, and/or functions described herein may be stored in storage 920 and executed by processor 910.

In some embodiments, server infrastructure 970 may be present in computing environment 900 and may be communicatively coupled with computing device 902 via network 904. Server infrastructure 970, when present, may be a network-accessible server set (e.g., a cloud-based environment or platform). As shown in FIG. 9, server infrastructure 970 includes clusters 972. Each of clusters 972 may comprise a group of one or more compute nodes and/or a group of one or more storage nodes. For example, as shown in FIG. 9, cluster 972 includes nodes 974. Each of nodes 974 are accessible via network 904 (e.g., in a "cloud-based" embodiment) to build, deploy, and manage applications and services. Any of nodes 974 may be a storage node that comprises a plurality of physical storage disks, SSDs, and/or other physical storage devices that are accessible via network 904 and are configured to store data associated with the applications and services managed by nodes 974. For example, as shown in FIG. 9, nodes 974 may store application data 978.

Each of nodes 974 may, as a compute node, comprise one or more server computers, server systems, and/or computing devices. For instance, a node 974 may include one or more of the components of computing device 902 disclosed herein. Each of nodes 974 may be configured to execute one or more software applications (or "applications") and/or services and/or manage hardware resources (e.g., processors, memory, etc.), which may be utilized by users (e.g., customers) of the network-accessible server set. For example, as shown in FIG. 9, nodes 974 may operate application programs 976. In an implementation, a node of nodes 974 may operate or comprise one or more virtual machines, with each virtual machine emulating a system architecture (e.g., an operating system), in an isolated manner, upon which applications such as application programs 976 may be executed.

In an embodiment, one or more of clusters 972 may be co-located (e.g., housed in one or more nearby buildings with associated components such as backup power supplies, redundant data communications, environmental controls, etc.) to form a datacenter, or may be arranged in other manners. Accordingly, in an embodiment, one or more of clusters 972 may be a datacenter in a distributed collection of datacenters. In embodiments, exemplary computing environment 900 comprises part of a cloud-based platform.

In an embodiment, computing device 902 may access application programs 976 for execution in any manner, such as by a client application and/or a browser at computing device 902.

For purposes of network (e.g., cloud) backup and data security, computing device 902 may additionally and/or alternatively synchronize copies of application programs 914 and/or application data 916 to be stored at network-based server infrastructure 970 as application programs 976 and/or application data 978. For instance, operating system 912 and/or application programs 914 may include a file hosting service client configured to synchronize applications and/or data stored in storage 920 at network-based server infrastructure 970.

In some embodiments, on-premises servers 992 may be present in computing environment 900 and may be communicatively coupled with computing device 902 via network 904. On-premises servers 992, when present, are hosted within an organization's infrastructure and, in many cases, physically onsite of a facility of that organization. On-premises servers 992 are controlled, administered, and maintained by IT (Information Technology) personnel of the organization or an IT partner to the organization. Application data 998 may be shared by on-premises servers 992 between computing devices of the organization, including computing device 902 (when part of an organization) through a local network of the organization, and/or through further networks accessible to the organization (including the Internet). Furthermore, on-premises servers 992 may serve applications such as application programs 996 to the computing devices of the organization, including computing device 902. Accordingly, on-premises servers 992 may include storage 994 (which includes one or more physical storage devices such as storage disks and/or SSDs) for storage of application programs 996 and application data 998 and may include one or more processors for execution of application programs 996. Still further, computing device 902 may be configured to synchronize copies of application programs 914 and/or application data 916 for backup storage at on-premises servers 992 as application programs 996 and/or application data 998.

Embodiments described herein may be implemented in one or more of computing device 902, network-based server infrastructure 970, and on-premises servers 992. For example, in some embodiments, computing device 902 may be used to implement systems, clients, or devices, or components/subcomponents thereof, disclosed elsewhere herein. In other embodiments, a combination of computing device 902, network-based server infrastructure 970, and/or on-premises servers 992 may be used to implement the systems, clients, or devices, or components/subcomponents thereof, disclosed elsewhere herein.

As used herein, the terms "computer program medium," "computer-readable medium," "computer-readable storage medium," and "computer-readable storage device," etc., are used to refer to physical hardware media. Examples of such physical hardware media include any hard disk, optical disk, SSD, other physical hardware media such as RAMs, ROMs, flash memory, digital video disks, zip disks, MEMs (microelectronic machine) memory, nanotechnology-based storage devices, and further types of physical/tangible hardware storage media of storage 920. Such computer-readable media and/or storage media are distinguished from and non-overlapping with communication media and propagating signals (do not include communication media and propagating signals). Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared, and other wireless media, as well as wired media. Embodiments are also directed to such communication media that are separate and non-overlapping with embodiments directed to computer-readable storage media.

As noted above, computer programs and modules (including application programs 914) may be stored in storage 920. Such computer programs may also be received via wired interface(s) 960 and/or wireless modem(s) 960 over network 904. Such computer programs, when executed or loaded by an application, enable computing device 902 to implement features of embodiments discussed herein. Accordingly, such computer programs represent controllers of the computing device 902.

Embodiments are also directed to computer program products comprising computer code or instructions stored on any computer-readable medium or computer-readable storage medium. Such computer program products include the physical storage of storage 920 as well as further physical storage types.

### IV. Additional Example Embodiments

In embodiments, a method for network policy generation comprises: determining first client data associated with a user device, the first client data comprising device information, network information, application information, and connection information; generating a first prompt based on the first client data; providing the first prompt to a task-specific fine-tuned model based on a pre-trained model; receiving, responsive to providing the first prompt, a network policy from the fine-tuned model; and providing the network policy to the user device, the user device enabled to enforce the network policy on the user device.

In embodiments, the method further comprises: receiving network policy feedback associated with a user of the user device; and generating a user policy guardrail based on the network policy feedback, wherein generating the first prompt is further based on the user policy guardrail.

In embodiments, the method further comprises determining an organizational policy guardrail provided by an organization associated with the user device, wherein generating the first prompt is further based on the organizational policy guardrail.

In embodiments, generating a first prompt based on the first client data comprises: determining, from the first client data, a parameter of the user device; determining, from the first client data, a value for the parameter of the user device; and generating the first prompt by including the parameter and the value of the parameter as a key and value pair.

In embodiments, generating a first prompt based on the first client data comprises: determining, from the first client data, a value for a parameter of the user device; and generating the first prompt by replacing a placeholder in a prompt template with the value.

In embodiments, the method further comprises: determining updated client data comprising a subset of the first client data that has changed since the generation of the network policy; determining unchanged client data comprising a subset of the first client data that remains unchanged since the generation of the network policy; generating an updated prompt based on the updated client data and the unchanged client data; providing the updated prompt to the fine-tuned model; receiving, responsive to providing the updated prompt, an updated network policy from the fine-tuned model; and providing the updated network policy to the user device enabling enforcement of the updated network policy on the user device.

In embodiments, generating an updated prompt comprises: retrieving the first prompt; determining, based on the updated client data, updated values associated with the subset of the first client data that has changed; and generating the updated prompt by replacing, in the first prompt, the subset of the first client data that has changed with the updated values.

In embodiments, the network policy comprises at least one of: a network resource prioritization policy associated with at least one of: a device identifier, an application identifier, a domain identifier, a protocol identifier, or a network identifier; a network resource allocation policy associated with at least one of: a device identifier, an application identifier, a domain identifier, a protocol identifier, or a network identifier; a network access policy associated with at least one of: a device identifier, an application identifier, a domain identifier, a protocol identifier, or a network identifier; or a network security requirement associated with at least one of: a device identifier, an application identifier, a domain identifier, a protocol identifier, or a network identifier.

In embodiments, a system for network policy generation comprises: a processor; and a memory device comprising program code structured to cause the processor to: determine first client data associated with a user device, the first client data comprising device information, network information, application information, and connection information; generate a prompt based on the first client data; provide the prompt to a task-specific fine-tuned model based on a pre-trained model; receive, responsive to providing the first prompt, a network policy from the fine-tuned model; and provide the network policy to the user device, the user device enabled to enforce the network policy on the user device.

In embodiments, the program code is further structured to cause the processor to: receive network policy feedback associated with a user of the user device; and generate a user policy guardrail based on the network policy feedback, wherein generating the prompt is further based on the user policy guardrail.

In embodiments, the program code is further structured to cause the processor to: determine an organizational policy guardrail provided by an organization associated with the user device, wherein generating the prompt is further based on the organizational policy guardrail.

In embodiments, to generate a first prompt based on the first client data, the program code is further structured to cause the processor to: determine, from the first client data, a parameter of the user device; determine, from the first client data, a value for the parameter of the user device; and generate the first prompt by including the parameter and the value of the parameter as a key and value pair.

In embodiments, to generate a first prompt based on the first client data, the program code is further structured to cause the processor to: determine, from the first client data, a value for a parameter of the user device; and generate the first prompt by replacing a placeholder in a prompt template with the value.

In embodiments, the program code is further structured to cause the processor to:
determine updated client data comprising a subset of the first client data that has changed since the generation of the network policy; determine unchanged client data comprising a subset of the first client data that remains unchanged since the generation of the network policy; generate an updated prompt based on the updated client data and the unchanged client data; provide the updated prompt to the fine-tuned model; receive, responsive to providing the updated prompt, an updated network policy from the fine-tuned model; and
provide the updated network policy to the user device enabling enforcement of the updated network policy on the user device.

In embodiments, to generate an updated prompt, the program code is further structured to cause the processor to: retrieve the first prompt; determine, based on the updated client data, updated values associated with the subset of the first client data that has changed; and generate the updated prompt by replacing, in the first prompt, the subset of the first client data that has changed with the updated values.

In embodiments, the network policy comprises at least one of: a network resource prioritization policy associated with at least one of: a device identifier, an application identifier, a domain identifier, a protocol identifier, or a network identifier; a network resource allocation policy associated with at least one of: a device identifier, an application identifier, a domain identifier, a protocol identifier, or a network identifier; a network access policy associated with at least one of: a device identifier, an application identifier, a domain identifier, a protocol identifier, or a network identifier; or a network security requirement associated with at least one of: a device identifier, an application identifier, a domain identifier, a protocol identifier, or a network identifier.

In embodiments, a method for task-specific fine-tuning of a pre-trained model comprises: determining a labeled training dataset for fine-tuning of the pre-trained model, the labeled training dataset comprising a prompt comprising a set of key and value pairs indicative of a device state associated with a user device, and a corresponding response comprising a network policy corresponding to the device state; training the pre-trained model based on the labeled training dataset to generate a fine-tuned model; and deploying the fine-tuned model.

In embodiments, determining a labeled training dataset comprises: determining a prompt template comprising first placeholders associated with user device parameters; determining a response template comprising second placeholders associated with network policy parameters; and automatically generating training samples for the labeled training dataset by replacing the first placeholders with parameter values indicative of a sample state of device, and the second placeholders with network policy values corresponding to the sample state.

In embodiments, training the pre-trained model comprises: dividing the labeled training dataset into a first dataset and a second dataset; training the pre-trained model based on the first dataset to generate an intermediate model; validating the intermediate model using the second dataset; determining, based on said validating, that the intermediate model satisfies a predetermined training condition; and concluding training of the pre-trained model.

In embodiments, the predetermined training condition comprises at least one of: a temporal condition; a cost condition; an iteration condition; an accuracy condition; an error condition; or a convergence condition.

### V. Conclusion

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

In the discussion, unless otherwise stated, adjectives such as "substantially" and "about" modifying a condition or relationship characteristic of a feature or features of an embodiment of the disclosure, are understood to mean that the condition or characteristic is defined to within tolerances that are acceptable for operation of the embodiment for an application for which it is intended. Furthermore, where "based on" is used to indicate an effect being a result of an indicated cause, it is to be understood that the effect is not required to only result from the indicated cause, but that any number of possible additional causes may also contribute to the effect. Thus, as used herein, the term "based on" should be understood to be equivalent to the term "based at least on."

While various embodiments of the present disclosure have been described above, it should be understood that they have been presented by way of example only, and not limitation. It will be understood by those skilled in the relevant art(s) that various changes in form and details may be made therein without departing from the spirit and scope of the invention as defined in the appended claims. Accordingly, the breadth and scope of the present invention should not be limited by any of the above-described exemplary embodiments, but should be defined only in accordance with the following claims and their equivalents.

## Claims

1. A method for network policy generation, the method comprising:
determining first client data associated with a user device, the first client data comprising device information, network information, application information, and connection information;
generating a first prompt based on the first client data;
providing the first prompt to a task-specific fine-tuned model based on a pre-trained model;
receiving, responsive to providing the first prompt, a network policy from the fine-tuned model; and
providing the network policy to the user device, the user device enabled to enforce the network policy on the user device.

2. The method of claim 1, further comprising:
receiving network policy feedback associated with a user of the user device, and generating a user policy guardrail based on the network policy feedback, wherein generating the first prompt is further based on the user policy guardrail; or
determining an organizational policy guardrail provided by an organization associated with the user device, wherein generating the first prompt is further based on the organizational policy guardrail.

3. The method of any preceding claim, wherein said generating a first prompt based on the first client data comprises:
determining, from the first client data, a parameter of the user device and a value for the parameter of the user device, and generating the first prompt by including the parameter and the value of the parameter as a key and value pair; or
determining, from the first client data, a value for a parameter of the user device, and
generating the first prompt by replacing a placeholder in a prompt template with the value.

4. The method of any preceding claim, further comprising:
determining updated client data comprising a subset of the first client data that has changed since the generation of the network policy;
determining unchanged client data comprising a subset of the first client data that remains unchanged since the generation of the network policy;
generating an updated prompt based on the updated client data and the unchanged client data;
providing the updated prompt to the fine-tuned model;
receiving, responsive to providing the updated prompt, an updated network policy from the fine-tuned model; and
providing the updated network policy to the user device enabling enforcement of the updated network policy on the user device.

5. The method of claim 4, wherein said generating an updated prompt comprises:
retrieving the first prompt;
determining, based on the updated client data, updated values associated with the subset of the first client data that has changed; and
generating the updated prompt by replacing, in the first prompt, the subset of the first client data that has changed with the updated values.

6. The method of any preceding claim, wherein the network policy comprises at least one of:
a network resource prioritization policy associated with at least one of: a device identifier, an application identifier, a domain identifier, a protocol identifier, or a network identifier;
a network resource allocation policy associated with at least one of: a device identifier, an application identifier, a domain identifier, a protocol identifier, or a network identifier;
a network access policy associated with at least one of: a device identifier, an application identifier, a domain identifier, a protocol identifier, or a network identifier; or
a network security requirement associated with at least one of: a device identifier, an application identifier, a domain identifier, a protocol identifier, or a network identifier.

7. A system for network policy generation comprising:
a processor; and
a memory device comprising program code structured to cause the processor to:
determine first client data associated with a user device, the first client data comprising device information, network information, application information, and connection information;
generate a prompt based on the first client data;
provide the prompt to a task-specific fine-tuned model based on a pre-trained model;
receive, responsive to providing the first prompt, a network policy from the fine-tuned model; and
provide the network policy to the user device, the user device enabled to enforce the network policy on the user device.

8. The system of claim 7, wherein the program code is further structured to cause the processor to:
receive network policy feedback associated with a user of the user device, and generate a user policy guardrail based on the network policy feedback, wherein generating the prompt is further based on the user policy guardrail; or
determine an organizational policy guardrail provided by an organization associated with the user device, wherein generating the prompt is further based on the organizational policy guardrail.

9. The system of claim 7 or 8, wherein, to generate a first prompt based on the first client data, the program code is further structured to cause the processor to:
determine, from the first client data, a parameter of the user device and value for the parameter of the user device, and generate the first prompt by including the parameter and the value of the parameter as a key and value pair; or
determine, from the first client data, a value for a parameter of the user device, and
generate the first prompt by replacing a placeholder in a prompt template with the value.

10. The system of any claim 7, 8 or 9, wherein the program code is further structured to cause the processor to:
determine updated client data comprising a subset of the first client data that has changed since the generation of the network policy;
determine unchanged client data comprising a subset of the first client data that remains unchanged since the generation of the network policy;
generate an updated prompt based on the updated client data and the unchanged client data;
provide the updated prompt to the fine-tuned model;
receive, responsive to providing the updated prompt an updated network policy from the fine-tuned model; and
provide the updated network policy to the user device enabling enforcement of the updated network policy on the user device.

11. The system of any claim 7, 8, 9 or 10, wherein, to generate an updated prompt, the program code is further structured to cause the processor to:
retrieve the first prompt;
determine, based on the updated client data, updated values associated with the subset of the first client data that has changed; and
generate the updated prompt by replacing, in the first prompt, the subset of the first client data that has changed with the updated values.

12. A computer program for programming one or more computers to perform task-specific fine-tuning of a pre-trained model by:
determining a labeled training dataset for task-specific fine-tuning of the pre-trained model, the labeled training dataset comprising a prompt comprising a set of key and value pairs indicative of a device state associated with a user device, and a corresponding response comprising a network policy corresponding to the device state;
training the pre-trained model based on the labeled training dataset to generate a fine-tuned model; and
deploying the fine-tuned model.

13. The computer program of claim 12, wherein said determining a labeled training dataset comprises:
determining a prompt template comprising first placeholders associated with user device parameters;
determining a response template comprising second placeholders associated with network policy parameters; and
automatically generating training samples for the labeled training dataset by replacing the first placeholders with parameter values indicative of a sample state of device, and the second placeholders with network policy values corresponding to the sample state.

14. The computer program of claim 12 or 13, wherein said training the pre-trained model comprises:
dividing the labeled training dataset into a first dataset and a second dataset;
iteratively training the pre-trained model based on the first dataset to generate an intermediate model;
validating the intermediate model using the second dataset;
determining, based on said validating, that the intermediate model satisfies a predetermined training condition; and
concluding training of the pre-trained model.

15. The computer program of claim 14, wherein the predetermined training condition comprises at least one of:
a temporal condition;
a cost condition;
an iteration condition;
an accuracy condition;
an error condition; or
a convergence condition.
